# EUROPEAN PATENT APPLICATION

(11) **EP 4 641 513 A1**
(43) Date of publication of application: **29.10.2025**
(21) Application number: 24172056.4
(22) Date of filing: 24.04.2024
(51) Int. Cl.: G06V 10/26, G06V 20/10, G06V 20/70

(54) **COMPUTER IMPLEMENTED QUANTIFICATION OF SEED MOISTURE CONTENT AND / OR THOUSAND KERNEL WEIGHT BASED ON COLOR IMAGES OF A SEED SAMPLE**

(71) Applicant: Bayer Aktiengesellschaft, 51373 Leverkusen (DE)
(72) Inventor: The designation of the inventor has not yet been filed
(74) Representative: BIP Patents

(57) **Abstract**

The invention relates to an easy-to-handle tool for non-invasive indirect measurement of seed parameter values based on acquisition and computer implemented analysis of an image of a small seed sample collected in the field. The solution can be implemented as portable device or as system comprising one or more portable image acquisition tools connected to a remote computer system for image analysis.

## Description

The invention relates to a convenient solution for quantification of seed moisture content and / thousand kernel weight of a seed sample with the aid of camera and computer implemented analysis of images acquired with said camera. In particular, the solution uses an easy-to-handle tool for acquisition of images of small seed sample under optimized and controlled imaging conditions and a solution for subsequent analysis of images acquired with said tool.

In particular, in Oilseed Rape seed (OSR) hybrid production, pre-harvest treatment is used to homogenize the dryness of the crop and thousand kernel weight (TKW) of the seeds. It is essential that such pre-harvest treatment is done at the right moment, i.e., at ideal seed moisture content to prevent a decrease in yield and seed quality. Example of pre-harvest treatment is swathing/windrowing the whole crop in the field using a swather/windrower.

So far, the right time for the pre-harvest is either estimated by a field worker by assessing seed color and size visually based on experience or using laboratory equipment that cannot be used directly in the field and requires a large amount of sample material. Laboratory equipment for thermogravimetric or moisture measurement have been commonly used [M. Vera Zambrano et al., Trends in Food Science & Technology 88 (2019) 484-496]. Near-Infra-Red based solution have been developed for field measurement. However, these solutions require extensive cleaning between measurements and precise calibration of the apparatus in the moisture range; use is mostly limited for measurement of moisture seed below 20%. In other words, the solutions of the art are time-consuming, require measurements to be conducted in a laboratory (off-field), require big number of seeds per sample (more than 1000 seeds), cannot not measure moisture within adequate target range (30-60 % should be covered) and / or require expert knowledge.

In summary, there is a need for a mobile and easy-to-use solution for field (or laboratory) measurement on small samples, that is comprising a limited number of seeds, for quick evaluation of seed maturity, in a non-invasive way and reproductible manner. A solution fulfilling said needs would be of particular interest for scheduling of harvest or pre-harvest field management measures, for example swathing/windrowing, or other field treatment. A solution implemented for OSR seeds should allow determining seed moisture values and / or TKW in the target range of seed moisture from approximatively 8% (dry mature seeds) to 60% (humid, unmature, separable seeds).

### SUMMARY OF THE SOLUTION

The solution of the invention relies on a correlation of seed moisture content and color measurements of the seed surface, also referred to as seed color, obtained by computer-implemented analysis of one or more images of a seed sample.

The solution is set out in the appended set of claims.

"Seed color" within the present application is associated with electromagnetic radiation of a range of wavelengths visible to the human eye described by RGB (red, green, blue) color values, wherein each parameter (red, green, and blue) defines the intensity of the color as an integer between 0 and 255. Alternative or additionally color space may be described by L*AB color values or Hue Saturation Values.

The term "seed" as used herein refers to the ripened ovule of gymnosperms and angiosperms, which contains an embryo surrounded by a protective cover. In particular, the term covers cereal kernels. The protective cover can comprise the seed coat (testa). Some seeds comprise a pericarp or fruit coat around the seed coat. When this layer is closely adhered to the seed, as in cereal kernels, it is in some cases referred to as a caryopsis or an achene. As used herein, the term "seed coat" or "seed surface" includes a caryopsis or an achene. In practical terms, the term "seed" includes but is not restricted to anything that can be planted in agriculture to produce plants, including pelleted seeds, true seeds, plant seedlings, rootstock, plant cuttings and plant parts such as a tuber or bulb.

The seed may be of the order of Monocotyledoneae or Dicotyledoneae. Virtually the sample may be of any plant seed, such as cereals, vegetables, ornamentals, and fruits. Particular plant seeds are selected from the group of corn (sweet and field), soybean, wheat, barley, oats, rice, maize, potato, sugar cane, sugar beet, cotton, sunflower, alfalfa, sorghum, rapeseed, Brassica spp., tomato, pepper, cucumber, melon, watermelon, onion, lettuce, spinach, leek, bean, carrot, tobacco and flower seed, for example, pansy, impatiens, petunia and geranium. Crop plants can be plants which can be obtained by conventional breeding and optimization methods or by biotechnological and genetic engineering methods or combinations of these methods, including the transgenic plants and including the plant varieties which can or cannot be protected by varietal property rights.

Color of seed coat can vary with seed variety, hybrids or traits, gender (male/female), seed size (range) or shape, geographical origin area, surface roughness, ...

The solution uses an easy-to-handle image acquisition tool (also referred to as imaging device) in combination with an application comprising instructions for image acquisition of a seed sample position in the imaging tool. The imaging device provides reproducible optimized image acquisition conditions, so incrementing of an image database can be achieved with adequate data quality. In an embodiment, image data is used for training of one or more algorithms for correlation between image features and moisture content value, TKW value and / or seed size. Trained algorithms can be later used for determination of said value(s) based on a color image for a new sample. The solution is applicable for image-based determination of one or more of these values for a seed sample at different maturity stage, that is varying from unmature, separable humid seeds to mature dry seeds. The solution therefore comprises a computer-implemented method for analysis of a color image of a seed sample to determine the seed moisture content value, seed size value and / or TKW value.

The solution is implemented for OSR seeds without being limited thereto. OSR seeds when separable have lost transparency (opaque seeds), which by experience corresponds to a ground truth seed moisture content value about 65 %. Mature OSR seeds have ground truth moisture content value of circa 8-10 %.

The skilled person will appreciate that these values may vary depending on the crop of interest. Generically, the solution is usable for separable seeds, so good quality color images of a seed sample positioned on a background (seed collecting region of an imaging device) can be acquired. "Separable seeds" or "separated seeds" as used herein relates to the ability for a seed sample comprising a plurality of seeds to build a monolayer on a seed collecting region. "Separable" is opposed to aggregated non-separable seeds in very humid state. The skilled person will also appreciate that these values may vary depending on the ground truth measurement methods. Examples of ground truth measurement method are described herein. Other measurement methods can be used for ground truth moisture measurement of a seed sample; a measurement method established in the technical field is preferred. OSR seeds are round. It is noted that the solution described herein is not limited to round seeds.

In an embodiment, the solution can used to determine seed moisture content and/or TKW value based on seed color value(s) for one or more sample and, for example determine average value(s) for a field.

Analysis of acquired images can be executed on site by one or more processors embedded in the imaging device configured for image analysis or in a remote manner, e. g. using a cloud-hosted system comprising one or more processors. A combination of on-site and remote analysis is also possible.

In an embodiment, the solution is configured for determining seed moisture content and / or TKW value for a seed sample by way of computer-implemented analysis of images acquired at time point t of image acquisition.

In another embodiment, the solution is configured to predict evolution of seed moisture content and / or TKW values over time and / or estimate seed moisture content and / or TKW values at later time point t+x based on computer-implemented analysis of one or more images acquired at time point t of image acquisition. In an example, best (pre-)harvest time can be estimated.

Typically, metadata relating to the seed sample are considered as influencing predictors during image analyses in addition to image data. In an embodiment, one or more of the metadata selected from seed genotype, time point of image acquisition, location of sample acquisition (field, field plot, sampling coordinates), weather data and historical field management information (field treatment, irrigation, soil information or the like), landscape information (orientation, topography, shadowing, ponding information, etc) are considered. In a particular embodiment, time point, location of sample acquisition and seed genotype are selected influencing predictors. Respective metadata can be introduced by the user, acquired from external sources (e.g. weather data services, local weather stations), obtained from measurement devices, or a combination thereof. Examples for measurement devices are field sensors (e.g. thermometer, anemometer, rain gauge, soil sensors, illumination sensors or the like) and / or location devices (GPS system, triangulation system or other positioning means) adapted to measure, record and transmit measured data to the one or more processors.

### DETAILED DESCRIPTION

Subjects of the invention and preferred embodiments are presented hereinafter.

In addition, the invention is described in detail. In this presentation and this description, no distinction is made between the individual subjects of the invention (method, system, computer program, etc..). The elucidations that follow shall instead apply analogously to all subjects of the invention, irrespective of the context in which they are made (imaging device, system, method, computer program product).

### Image acquisition tool

The image acquisition tool is a portable device for image acquisition of a seed sample under reproducible imaging conditions, in particular lighting, eventually geometrical orientation and limited overlap of the seeds during image acquisition.

The imaging device comprises:
A seed collecting region configured to receive a seed sample;
An opaque chamber delimited by a chamber floor comprising the seed collecting region and a chamber top connected by chamber side walls between the chamber floor and the chamber top;
One or more imaging unit comprising an image sensor, preferred a camera, positioned to acquire an image of a scene comprising at least part of the seed sample positioned in the seed collecting region.

In an embodiment, the seed sample comprises a plurality of separable seeds.

### Chamber / drawer

In an embodiment, the chamber side walls are dark, preferred black, to avoid reflections and / or extraneous light.

In an embodiment, the chamber can be in cylindrical, conical, pyramidal or box-shaped form. It preferably has a rectangular (especially square) cross section, and the walls extend upward from the base, with base surface and wall surface preferably running at an angle of more than 90° and less than 120° relative to one another.

In an embodiment, the chamber has a truncated pyramid form with rectangular or square base, wherein the imaging unit is placed at the truncated top of the pyramid. The dimensions LxWxH (Length x Width x Height) and angle of the lens barrel are adjusted to the optimal focus settings of the image sensor.

In an embodiment, the device comprises a light-tight drawer to easily introduce or remove the seed sample into/from the opaque chamber, wherein the drawer is delimited by drawer walls connected to a drawer floor building the seed collecting region.

In an embodiment, the drawer comprises a handle on the front for easy opening and one or more magnetic holders on the back, so it can open easily but does not fall out accidentally out of the chamber, for example when the device is being transported.

In an embodiment, the seed collecting region is planar. It can with a round, oval, elliptical, angular (triangular, tetragonal, pentagonal, hexagonal, or generally n-angular, with n being an integer greater than or equal to 3) cross section. Preferably, the cross section is rectangular, for example square.

In an embodiment, the seed collecting region is planar/flat, rough, or structured.

In an embodiment, the drawer is configured to build elevated tilted walls towards the planar seed collecting region, so seeds spontaneously nicely distribute in the collecting region. Elevated tilted walls are also advantageous for smooth complete pouring of (small) seeds out of the drawer, for example back into a seed bag without losing them.

In an embodiment, tilted walls are planar or structured.

In an embodiment, elevated walls tilted towards a plane collecting region are provided by an insert for the drawer, said insert comprising elevated walls tilted towards the planar seed collecting region. Insert dimensions are adapted to the drawer.

In an embodiment, the seed collecting region is blue. Blue color was found to be advantageous for easier image segmentation of seeds from background.

In an embodiment, the seed collecting region has a glossy, matt, rough or structured surface. The collecting region preferably has a rough or structured surface to avoid direct reflections of lighting from the collecting region onto the image sensor.

In an embodiment the insert is made of blue rigid or semi-rigid synthetic material for easy cleaning.

### Lighting

In an embodiment, the imaging unit further comprises one or more lighting source(s) directed to the collecting region, such that light (electromagnetic radiation in the infrared, visible and/or ultraviolet region of the spectrum) is scattered/reflected by the illuminated collecting region in the direction of the imaging unit.

In an embodiment, such lighting source(s) can be activated by way of an activation lamp function of the imaging unit and / or image acquisition with a camera flash function.

In an embodiment, lighting source(s) is preferably mounted laterally alongside the imaging unit, such that no shadows of the imaging unit are thrown onto the collecting region.

It is also conceivable to position an illumination source beneath the collecting region and/or alongside the collecting region, which illuminates the collecting region "from the side", whereas an imaging unit produces one or more digital images "from the top".

It is conceivable that multiple illumination sources illuminate the collecting region from different directions.

It is conceivable that the electromagnetic spectrum of the light emitted by the lighting sources for illumination is matched to the color of specific seeds and/or the color of the collecting region, to produce a maximum contrast between the seeds and the background against which they are imaged.

In an embodiment, the illumination, color and/or surface characteristics of the collecting region is chosen such that the electromagnetic radiation used for illumination is thrown back (reflected or scattered) more significantly by the sample than by the collecting region. In an alternative embodiment, the illumination, and/or surface characteristics of the collecting region is chosen such that the electromagnetic radiation used for illumination is thrown back (reflected or scattered) more significantly by the collecting region than by the sample. Both cases ensure high contrast. A high contrast facilitates the computer-implemented identification of (specific) sample from the surface of the collecting region (also referred to as background in image analysis).

The term "light" and "illumination", incidentally, is not supposed to mean that the spectral region is limited to visible light (about 380 nm to about 780 nm). It is likewise conceivable that illumination is conducted using electromagnetic radiation having a wavelength below 380 nm (ultraviolet light: 100 nm to 380 nm) or above 780 nm (infrared light: 780 nm to 1000 µm). The image sensor and the optical elements are matched to the electromagnetic radiation used.

### Imaging unit

The imaging device further comprises one or more imaging units used to generate digital images. An imaging unit comprises an image sensor and optical elements.

In an embodiment, the image sensor is a device for recording two-dimensional images from light by electrical means. This typically comprises semiconductor-based image sensors, for example CCD (CCD = *charge-coupled device*) or CMOS sensors (CMOS = *complementary metal-oxide-semiconductor*)*.* The optical elements (lenses, stops and the like) serve for maximum sharpness of imaging of the object of which a digital image is to be generated on the image sensor.

In an embodiment, the imaging unit is positioned such that the entire or at least part of the seed collecting region is imaged on the image sensor. It is conceivable to use multiple imaging units that image different regions of the collecting region on the respective image sensor. In the case of such a use of multiple imaging units, it is advantageous when the regions imaged at least partly overlap, to be able to generate an overall image in a simpler manner from the individual images at a later juncture.

In an embodiment, the imaging unit is set with fixed exposure time and focus for acquisition of multiple images. Fixed settings improve reliable model-based image analysis.

In an embodiment, the imaging unit is positioned at the chamber top. In other words, the image sensor, such as a camera, is positioned to acquire an image of the collecting region from above.

In an embodiment, the chamber top is configured to accommodate the detachable imaging unit in a fixed position relative to the seed collecting region.

In an embodiment, the device comprises a holder for positioning and (reversibly) fixing the imaging unit or part thereof. The holder is preferably at a defined and constant distance from the collecting region, and hence ensures a defined and constant distance between the image sensor and the collecting region. This facilitates the focusing of the collecting region.

### Image acquisition

In an embodiment, image acquisition comprises placing a seed sample on the seed collecting region of the imaging device, closing the opaque chamber, typically by way of closing the drawer, and triggering the imaging unit to capture one or more images of a scene comprising at least part of the seeds collecting region, preferably at least the whole seeds collecting region.

In an embodiment, the scene comprises the seed collecting region and part of the elevated tilted walls framing the seed collecting region.

In an embodiment, image acquisition can be supported by the imaging device by way of one or more of:
Prompting user to introduce or confirm metadata related to the sample, such as but not limited to identification for seed sample, field, day and time, etc.;
Providing an image preview of the scene to be captured to the user by way of causing activating lighting sources for display of the illuminated scene on a display screen,
Providing a test image by way of an imaging test imaging function activating the lighting source and the imaging unit in a camera flash function.
Causing checking adequacy of imaging conditions by running a function of comparing imaging conditions measured by the imaging device with predefined thresholds;
Prompting the user to confirm correct imaging conditions or image acquisition;
Prompting user that image acquisition is completed; and / or
Prompting user to introduce new sample at same or different location;
Causing transmission of acquired image data, typically image together with related metadata, to one or more processors configured for image storage, image treatment and / or image analysis.

Correct imaging conditions herein may refer to one or more of adequate sample seed count, adequate positioning of the seeds in the seed collecting region, adequate orientation of the imaging device based on sensor information provided by the imaging device, adequate lighting conditions, clean, dirty, or damaged optics for imaging unit, correct definition (no blur) and the like.

### Control Unit

In an embodiment, the imaging device comprises a control unit comprising one or more processors configured at least to trigger the at least one imaging unit to record digital images of the seed sample and transmit the images and related metadata to one or more processors configured for computer-implemented analysis of images and related metadata.

In an embodiment, the one or more processors of the control unit are configured to carry out the method steps supporting image acquisition.

In an embodiment, the one or more processors are configured for one or more of the following steps:
Prompting user on the peripheral for introducing or confirming identificator for seed sample;
Prompting user on the peripheral to introduce (new) sample;
Triggering the imaging unit of the imaging device to generate images of the seed collecting region;
Prompting the user to check positioning of the seeds on the seed imaging surface by way of activating a light source and / or a function of test imaging; and / or
Informing user on the peripheral that image acquisition is completed.

In an embodiment, the one or more processors can be configured to capture single or multiple images. Images can be acquired regularly or irregularly.

For better results, it is preferred that for each sample images from all sides of the seeds are acquired. In an embodiment, the one or more processors are configured to prompt the user for wobbling between two image acquisitions.

In an embodiment, image acquisition is repeated until a predefined number of images are acquired for the sample. In an embodiment, 2 to 10 images are acquired. In an example, 5 images per sample are acquired, wherein the imaging device is wobbled between image capture.

In an embodiment, the one or more processors can be configured to route the one or more images to a transmitter unit. Alternatively, the one or more processors can be configured to average image data of the multiple images for the sample and averaged image data is routed to the transmitter unit.

In an embodiment, the control unit is configured to control one or more of the lighting sources, e. g. for image acquisition, test imaging function and / or checking adequacy of imaging conditions, etc...

In an embodiment, the one or more processors are configured to control adequacy of imaging conditions. Inadequate condition for image acquisition may be for example insufficient contrast, inadequate sample (too much or too little seeds), default in lighting, sharpness, blur, etc. Control of adequate conditions may be conducted on an image preview, a test image and / or the acquired image.

Control of adequate conditions typically relies on comparison of a measured or calculated value with predefined threshold. Methods of the art can be implemented for control of imaging conditions by the one or more processors. Examples are further described below.

In an embodiment, the one or more processors are configured to conduct a blur check. Blur check can be conducted during test imaging function and / or on acquired images. The one or more processors may be configured to warn the user in case images are blurry and / or to disregard acquired blurry images. Blur check and / or sorting out of blurry images is further described below.

In an embodiment, the system comprises peripherals or is connected to peripherals.

In an embodiment, the one or more processors are configured to cause an alarm signal for inadequate imaging conditions on a peripheral.

In an embodiment, the control unit is configured for causing display of the image preview or of the test image to the user on a peripheral for quality check, prompting the user for instruction of capturing one or more images.

In an embodiment, the control unit is configured for prompting the user to confirm instructions regarding storing and / or of transmitting acquired image data via a network to one of more computer systems comprising one or more processors configured for storage of image data in an image depository and/or treatment of the transmitted image data.

In an embodiment, image acquisition further comprises automatically triggering the transmitter unit to send the referred to as image data via a network to the one or more computer systems.

In embodiment, the imaging device and / or the computer system comprise peripherals for displaying test images, acquired images and / or results of image analysis.

In an embodiment, the device and / or the computer system can comprise an image data repository for storage of the seed sample image data. Said image data repository can be part of the imaging device and / or part of a remote computer system.

In an embodiment, the control unit can be configured to route the images recorded and / or information relating to the one or more images to a transmitter unit for sending them via a radio network to one or more remote computer system comprising an image data repository and / or one a more processors configured for image storage and analysis.

This information may be the one or more images themselves, averaged image data or preprocessed image data. In an embodiment, image data comprises metadata.

The transmitter unit may be configured such that it transmits information via a mobile communications network (e.g. GSM: Global System for Mobile Communications, GPRS: General Packet Radio Service; UMTS: Universal Mobile Telecommunications System, LTE: Long Term Evolution), via a WLAN (Wireless Local Area Network), via Bluetooth, via DECT (Digital Enhanced Cordless Telecommunications) via a low-power wide-area network (LPWAN or LPN)), for example a NarrowBand IoT network and/or via a combination of different transmission routes.

In an embodiment, the transmitter unit is configured such that it transmits information via a short-range (radio) link to a base station, from which the information is then transferred to cable and/or passed on via a long-range radio connection. The term "short-range" means that the distance between transmitter and receiver is preferably not greater than 5 km, more preferably not greater than 1 km. A greater distance than the specified maximum distance would mean that faultless transmission of data from the transmitter to the receiver is no longer assured. The term "long-range" means that the distance between transmitter and receiver is preferably greater than 1 km, more preferably greater than 5 km. Communication via a short-range link can be achieved, for example, by means of radio, ultrasound and/or (laser) light.

### GPS / positioning means

In an embodiment, each acquired image is assigned to a geographical location at which the seed sample was collected. In case image is acquired in the field, this is typically the position where the imaging device generates images. It may alternatively be a position in the environment of a device (for example the position of a base station with which the respective device is connected via a radio connection), or the position may be fuzzy in that, for example, a region on the Earth's surface where the device is present (in the form of a circle with a defined radius), a field plot or a field location is specified.

In a preferred embodiment, the system of the invention comprising means of determining the geographical position of the imaging device at image acquisition.

It is conceivable that the imaging device comprises a GPS sensor (GPS: global positioning system) or another sensor of a global satellite navigation system (GNSS) with which the position of the device can be ascertained. One advantage of determining position by means of a global satellite navigation system is high accuracy. Disadvantages are the additional component costs and the comparatively high energy demand.

It is also conceivable that the position is determined by means of the radio cell to which the transmitter unit is connected. Such a solution typically has a lower accuracy than determination of position but means lower component costs and a lower energy demand.

In mobile communications, the simplest way of determining position is based on the fact that the cell in which a transmitter unit is present is known. Since, for example, a switched-on mobile phone is connected to a base station, the position of the mobile phone can be assigned to at least one mobile communications cell (cell ID). It is also possible to proceed analogously with a device of the invention.

With the aid of GSM (Global System for Mobile Communications), the position of a transmitter unit can be determined accurately to several hundred meters. In towns, the position can be determined accurately to 100 to 500 m; in rural areas (in which the density of base stations is lower), the radius is increased to 10 km or more. If the information is combined with the TA parameter (TA: Timing Advance) via the cell ID, the accuracy can be increased. The higher this value, the greater the distance of the transmitter unit from the base station. It is possible to locate a transmitter unit even more accurately by the EOTD method (EOTD: Enhanced Observed Time Difference). This determines the differences in transit time of the signals between the transmitter unit and multiple receiver units.

In one embodiment, information is ascertained, and position is determined by means of the Sigfox grid. Sigfox is a low-power wide-area network (LPWAN) and is specifically designed for small data packets and very power-saving operation. Sigfox can communicate over long distances without disruption. The range of a single base station, which can control up to one million transmitter units, is 3 to 5 km in areas of high population density and 30 to 70 km in rural areas. In the case of Sigfox, the data packets are received by all base stations in the transmitter region. This can be used to determine the position of a transmitter unit.

It is also conceivable that the position of an imaging device is detected when it is registered. In such a case, one step of the registration is the association of the imaging device and position. It is conceivable that a user, by means of a mobile computer system (e.g. a smartphone or a tablet computer or the like), detects an unambiguous identifier of the device and associates it with position information. The unambiguous identifier serves for identification of the device when it is registered. The unambiguous identifier may be a number or an alphanumeric code or a binary code or the like which is mounted on the device or recorded in a data storage means of the device. The unambiguous identifier can be detected, for example, by input via an input device (e.g. a keyboard, a touch screen, a microphone (by speech input) or the like) into the mobile computer system. Preferably, the unambiguous identifier takes the form of an optically readable code (for example a barcode or matrix code or the like) or of an electronic storage means that can be read out by radio (e.g. in the form of an RFID tag) or the like. This has the advantage that the unambiguous identifier can be read out automatically with the mobile computer system, and input errors (as in the case of a user typing it in using a keyboard) are avoided. An optical code can be detected, for example, with a camera that may be part of the mobile computer system. In a further step, the position is determined. It is conceivable that the means of determining position are provided by the user's mobile computer system. The mobile computer system may, for example, be a smartphone with which the position is determined via the radio cell to which the smartphone is connected, or with a GPS sensor associated with the smartphone.

It is preferred that metadata associated with acquired image of a seed sample comprises geographical location at which the sample was collected. The person skilled in the art will appreciate that such location can be collected automatically by the imaging device or introduced by user.

If the unambiguous identifier has been detected and the position determined, these pieces of information are associated with one another. The association assigns the device to a position. It is conceivable that the associated information is transmitted via a network to an external computer system and stored therein. It is also conceivable that the associated information is stored on the user's mobile computer system.

On registration, preference is given to additionally associating the unambiguous identifier of the device with an unambiguous identifier of the user, such that the user is assigned an individual device (or multiple devices) with a defined position. As a result of this association, the user is preferably able to receive only images from the device assigned to the user.

The information which is transmitted by the imaging devices by means of the corresponding transmitter units to a computer system can be processed, analyzed, archived and/or issued to a user therein.

Further information related to an acquired image may comprise geographical location, day and time of image acquisition; additional information is generically referred to as metadata. Metadata related to the image may be introduced by the user into the imaging device and / or the computer system by way of peripheral, and / or collected from a data repository based on geographical location. Examples for such further data are field name, genotype of the seeds, weather condition at the location, time and day of image acquisition, etc... Metadata and acquired images are together referred to as image data.

In the present application, a "computer system" is a system for electronic data processing that processes data by means of programmable computation rules. Such a system typically comprises a "computer", that unit which comprises one or more processors for performing logic operations, and also peripherals.

In computer technology, "peripherals" refer to all devices which are connected to the computer and serve for control of the computer and/or as input and output devices. Examples thereof are monitors (screen), printers, scanners, mice, keyboards, drives, cameras or imaging devices, microphones, loudspeakers, sensors, etc. Internal ports and expansion cards are also considered to be peripherals in computer technology.

Today's computer systems are frequently divided into desktop PCs, portable PCs, laptops, notebooks, netbooks and tablet PCs and so-called handhelds (e.g. smartphones); all these systems can be used for execution of the solution. In other words, processors configured to run the methods described in the present application can be integrated into the (portable) imaging device and / or parts of a remote computer system.

Inputs into the computer system are made via input devices or input peripherals, for example a keyboard, a mouse, a microphone and/or the like. "Input" shall also be understood to mean the selection of an entry from a virtual menu or a virtual list or clicking on a selection box and the like.

A system can comprise several devices that are assigned to a computer system. The devices and the computer system can be connected to one another via a network, such that the devices can transmit information (data, images, status information, sensor data or the like) to the computer system. It is also conceivable that the system is configured such that the computer system can transmit information or control commands to the devices. The network via which the computer system and the devices are connected to one another can be at least partly a radio network. Information can be transmitted from a device (an imaging unit or a repository comprising images data acquired using an imaging unit) via a transmitter unit by radio to a base station, from which it is passed onward (optionally via further stations) by radio and/or via cable to the computer system comprising one or more processors configured for the treatment and/or analysis of the transmitted information.

A computer system can comprise a data repository, data library or data archive, that is a data set isolated to be mined for data reporting and analysis. The data repository can be a large database infrastructure - several databases - that collect, manage, and store data sets for data analysis, sharing and reporting.

### Measurements for an area - variability

The imaging device allows convenient image acquisition at a location in a field or more generically in an area or a sub-area under optimized standard conditions.

An "area" is understood to mean a spatially delimitable region of the Earth's surface on which the plants of interest grow. Preferably, the area is at least partly utilized agriculturally in that crop plants are planted in one or more fields, are supplied with nutrients and are harvested. An area can be a controlled growing environment or a macrozone, e. g. the European macrozone. An area may also be or comprise a silvicultural utilized region of the Earth's surface (for example a forest). Also, gardens, parks or the like in which vegetation exists solely for human pleasure are covered by the term "area".

An area preferably includes a multitude of fields for crop plants. In a preferred embodiment, an area corresponds to a growing area for a crop plant (for definition of a growing area see, for example, Journal für Kulturpflanzen, 61 (7). p. 247-253, 2009, ISSN 0027-7479). In another preferred embodiment, an area corresponds to a biome (for definition of equivalent German term Boden-Klima-Raum see, for example, Nachrichtenbl. Deut. Pflanzenschutzd., 59(7), p. 155-161, 2007, ISSN 0027-7479).

A "sub-area" is understood to mean a preferably contiguous region within an area. A sub-area is preferably one or more fields in which a specific crop plant is being grown. An example of sub-area is a "field plot". The sub-area is preferably being farmed by a farmer having registered access to a portable imaging tool and optionally one or more plant analysis devices.

In an embodiment, the solution allows indirect measurement of one more seed parameter values - moisture content value, TKW value, and / or moisture-dependent TKW value - based on color images for a seed sample collected at a particular location.

In an embodiment, seed parameter values for a seed sample can be ascertained for an area or for a sub-area comprising one or more locations.

In an example, determination for a sub-area is preferred when variability of the indirectly measured seed parameter values ascertained for the whole area exceeds a predefined threshold. In an example, determination for sub-areas is used in field trials. In an embodiment, the solution comprises determining seed moisture content and / or TKW values at a time point t for several seed samples, at different locations of an area (or sub-area) and determining a variability range for said values for the area (or sub-area as the case may be).

The ascertaining of one or more seed parameter range (variability range) is useful from an agricultural management point of view. A seed moisture and / or TKW range indicates the seed maturity for the area of interest and can be used for scheduling of an area management task such as pre-harvest treatment and / or harvest, over and above which aera management task is economically viable. Outside acceptable variability range, loss of yield and / or decreased seed storability and viability is to be expected.

For image acquisition in a field, in an area, at least one imaging device is used.

For assessment of the seed moisture content and / or thousand kernel weight in an area, at least one seed sample and at least one image of said seed sample, preferred several images of the seeds from different sides, is needed.

In an embodiment, more than one seed sample are imaged for evaluation of seed maturity in an area. In an embodiment, ascertaining of seed parameter value for the area can be obtained by way of averaging the results for image analysis for all the seed samples of the area and / or determining a range of seed determined seed parameter values for the area. In an embodiment, a distribution of determined seed parameter values for the area can be determined.

In an embodiment, the system can be configured to define one more sub-areas and determine an average value and / or a range for seed parameter values for the sub-area.

Defining sub-areas is of particular interest, in case the determined distribution of any one of the determined seed parameter values for the area is above a predefined threshold or ascertained range for determined seed parameter value for the area is too broad. Defining sub-areas can be used for area mapping, wherein results for one or more subareas are shown. In an embodiment, the solution can be configured to build sub-areas based on variability analysis of the seed parameter values determined for different locations within the area. In an embodiment, the solution can be configured to generate a moisture content value map and / or a TKW value map of the area or sub-areas thereof.

In an embodiment, the system is configured to compute discrete locations or a trajectory comprising discrete locations (also called an acquisition path) for image acquisition by the user within the area and / or sub-area, for example in consideration of topography, shadowing, ponding information (together referred to as landscape information) of the area/sub-area at stake. In this case, the system can be configured to transfer the computed acquisition path and/or discrete locations to the control unit. In an embodiment, landscape information can be stored as metadata related to the seed sample and images thereof.

In an embodiment, the control unit can be configured for causing display of the acquisition path and/or causing prompting the user to introduce seed sample at the discrete location(s) in the field according to acquisition path.

In an embodiment, the one or more processors of the control unit can be configured for one or more of the following steps:
Acquiring one or more discrete location and / or an acquisition path for sampling in the field;
Displaying at least one of the discrete locations for sampling and / or acquisition path to the user via a peripheral;
Prompting user for introducing or confirming identificator for seed sample, field, day and time, etc;
After image acquisition is completed as described above, prompting user to introduce a new sample in the collection region at/from the same or another discrete location optionally according to a computed acquisition path.

Sampling at discrete location can be advantageous to build a repository of historical data.

Sampling at discrete location can also be of interest to evaluate effect of field topography/landscape on the seed maturity at a time point.

In an embodiment, the solution is implemented so sample acquisition and image acquisition can be automated, for example by instructing a robot.

The information transmitted by one or more imaging devices described above to a computer system, by means of the corresponding transmitter units, can be processed, analyzed, archived in said computer system and/or issued to a user by way of peripherals.

The solution can be implemented as a portable device or as system comprising one or more portable imaging acquisition devices connected to a remote computer system.

### Image analysis

First object of the application is a system comprising:
One or more peripherals;
One or more data repository;
One or more processors configured for:
Causing receiving image data from a scene comprising a seed sample of a plurality of seeds, said image data comprising quantized values representing color of image pixels;
Assigning each image pixel of the image data to seeds or background using a segmentation algorithm;
Analyzing the part of the image pixels assigned to seeds, by way of one or more of:
   Determining, using a moisture content model trained to solve a regression problem of correlating image features with seed moisture content value, a seed moisture content value for the seed sample based on feature analysis of the image pixels assigned to seeds; and / or
   Determining, using a TKW model trained to solve a regression problem of correlating image features with TKW value, a TKW value for the seed sample based on feature analysis of the image pixels assigned to seeds
Causing output of one or more of the determined value(s).

Further object of the application is a computer-implemented method comprising:
Causing receiving image data from a scene comprising a seed sample of a plurality of seeds, said image data comprising quantized values representing color of image pixels;
Assigning each image pixel of the image data to seeds or background using a segmentation algorithm;
Analyzing the part of the image pixels assigned to seeds, by way of one or more of:
   Determining, using a moisture content model trained to solve a regression problem of correlating image features with seed moisture content value, a seed moisture content value for the seed sample based on feature analysis of the image pixels assigned to seeds; and / or
   Determining, using a TKW model trained to solve a regression problem of correlating image features with TKW value, a TKW value for the seed sample based on feature analysis of the image pixels assigned to seeds;
Causing output of one or more of the determined value(s).

Image data can be received from the image acquisition tool described above or from a data repository comprising image data acquired with the imaging device.

In an embodiment, the one or more processors are part of a remote unit for image analysis. Alternatively, the one or more processors of the image acquisition tool described above can comprise the one or more processors configured to conduct image analysis, that is the one or more processors can be embedded in the imaging device. For example, a mobile phone or a smartphone with imaging and computing capacity can be used. In an embodiment, the solution can be configured for offline/remote use with limited computing capacity. Embodiment for "light" configuration is further described below.

### Image pretreatment

In an embodiment, the one or more processors can be configured to conduct pretreatment of the image data. The one or more processors can be configured to cause display of the results of said pretreatment of image data and / or introduce the pretreated image data into one or more algorithms for analysis of image data.

In an embodiment, image pretreatment comprises quality check of image data. In an embodiment, the solution can be configured to generate an alarm in case inadequate condition for image acquisition are identified, for example insufficient contrast, inadequate sample (too much, too little seeds), inadequate seed positioning in the image (seed cumulated in one location), default in lighting, lack of definition (blur), etc.

Processors configured for image pretreatment may be integrated in the imaging device, in which case treated image data can be transmitted or stored in an image data repository for later analysis. Alternatively, or additionally processors configured for pretreatment of image data can be integrated in a remote computer system for image analysis.

As the imaging device of the invention allows controlled reproducible imaging conditions, minimal pretreatment is sufficient.

In an embodiment, image pretreatment comprises automated check for enough seeds in the image (generically referred as seed count value).

In an embodiment, the automated check of seed number is based on the ratio of the surface of the seed collecting area covered by the seed sample to the whole surface of the seed collecting area. As a matter of example, for best computer-implemented model-based analysis of a OSR seed sample, it was found advantageous that a sample comprising around 300 seeds is imaged. 300 OSR seeds as a monolayer statistically roughly cover one quarter of the blue seed collecting area of the image acquisition device described above. In an embodiment, adequate number of seeds can be checked by visual inspection of the surface covered with seeds or blue background. Alternatively, an algorithm can be implemented which automatically assign pixels to seeds (not blue pixels) or background (blue pixels) and evaluate the surface of the image covered by pixels assigned to seeds in the image compared to the number of pixels attributed to background/blue seed collecting area. In an embodiment, seed count can be determined by a segmentation algorithm as further described below. In an embodiment, a warning can be implemented to be displayed in the application in case there are not enough seeds in the image. Warning may or may not prevent the user from saving the image. The system may be configured to warn the user before or after image analysis, that the seed sample was outside the optimal range for seed count. In an embodiment, the system can be configured to disregard images, wherein the number of seeds is outside the required range or below a minimum threshold for seed count.

In an embodiment, image pretreatment may comprise cropping and / or resizing the image to focus on the seed collecting region, preferably the whole surface of the collecting region for further analysis.

Cropping of image as used herein refers to dividing received image into smaller patches (x, y) to remove unwanted areas from an image, typically outer areas are cropped to improve image framing, change the aspect ratio, or accentuate or isolate the subject matter from its background. In an embodiment of the present solution, cropping of image is done to remove the unwanted surrounding and not relevant areas from the image and to select the region of interest (ROI).

In an embodiment, image pretreatment may comprise image resizing. It is preferred that image resizing is conducted after image cropping. In an embodiment, image resizing comprises down scaling the image.

In an embodiment, it is preferred to fit the image to the requirements/characteristics of utilized trained model(s) for image analysis, in particular neural networks further described below. In an embodiment, cropping is conducted with cropping parameters used for cropping the training data set for model training. In an embodiment, resizing is conducted with resizing parameters used for resizing the training data set for model training.

In an embodiment, image pretreatment comprises one or more of blurriness check or blur filtering. For this purpose, an algorithm is used that checks the blurriness of the image with a threshold. In an embodiment, the image is converted to a gray scale image and a Laplacian function is used to calculate a blurriness coefficient. In an embodiment, the system is configured to display a warning if the image blurriness coefficient is below a defined threshold. It is preferred that the blurriness coefficient is saved in the image metadata and is available in the image repository. The system can be configured to warn the user before or after image analysis, that the blurriness coefficient is above a certain threshold. Alternatively, the system may be configured to automatically disregard (filter out, also referred to as "blur filtering") images with insufficient sharpness. Known method for computer-implemented blurriness check can be used for blurriness check (e.g. https://ieeexplore.ieee.org/document/7894491).

Thanks to reproducible imaging conditions provided by using the image device described above, normalization of environmental variations, in particular illumination effects is not needed. Considering variations related to the camera, detector sensitivity and / or embedded camera automatic image pretreatment algorithms, it is preferred that training data for model training and new images are acquired with the same camera/image acquisition unit.

Pretreated images are saved in an image repository and / or transmitted for image analysis by the one or more processors.

### Seed count values

As already mentioned, a quality check for imaging relates to evaluating seed count.

In an embodiment, a seed count in seed sample can be determined based on the number of centroids identified by the segmentation algorithm further described below (output of the segmentation algorithm) from the image/heatmap of the seed sample.

In an embodiment, seed count is determined during performance of the ground truth methods for generation of a training data set. In an embodiment, ground truth seed count is stored in the image metadata. Ground truth seed count can be used to validate the segmentation algorithm.

Exact seed count is usually not needed for proper running of a model-based image analysis for a new sample. In most cases, a ratio of the surface of the seed collecting area covered by the seed sample to the whole surface of the seed collecting area is used as "seed count value" to evaluate adequate seed count criteria being fulfilled.

### Determining best range for seed count values

As already mentioned, it was shown that the solution described above is improved when the number of seeds in a seed sample for image acquisition comprises enough separable seeds. For example, adequate number of OSR seeds is chosen within a range from 300 to 1000 seeds.

The skilled person will appreciate that the solution is not limited to OSR; it can be applied to seed types, which seed maturity can be recognized by color change, for example but not limited to brassica and canola.

In an embodiment, the solution comprises determining a best seed count range for which the solution is implemented.

In an embodiment, criteria for choosing the seed count range are one or more of:
Seed size, seed form;
The seed count range can be chosen to provide statistically relevant seed information for a location; and / or
Measurement of ground truth values may require a particular seed count range. In an embodiment, seed count range for image-based measurement is like or close to seed count range for ground truth measurement for improved validity of model with ground truth values.

In an embodiment, the surface of the seed collecting region in the image acquisition device is chosen, so the seed sample with adequate seed count nicely spreads as a monolayer, and so it can be effectively reorganized on the seed collecting region by wobbling the imaging device (means only part of the seed collecting region is covered by the seed sample).

In an embodiment, best range for seed count is identified once by experiment for best performance of the model-based value determination. For this purpose, a training data set comprising image data and respective ground truth value with different seed counts is acquired, a model for value determination (moisture content model, TKW model or moisture dependent TKW model further described below) is trained with said training data set; validity of image-based value determination in relation to seed count is determined in a validation test. Best seed count range showing best validity score is selected for robust method. A training data set comprising image data of a seed sample and respective ground truth value for the sample within best seed count range is prepared and the model is trained with said training data set.

In an example, seed samples containing from 50 to 1000 OSR seeds are prepared, with increments of 50 seeds using a seed counting machine (such as https://www.pfeuffer.com/de/produkt/contador). The number of seeds is stored as metadata for each sample as ground-truth number of seeds. Color images are acquired for each sample. The sample is submitted to one of the ground truth measurement methods below to obtain training data sets with different seed counts.

### Sub-processes of image analysis

In an embodiment, the computer system comprises one or more processors configured to conduct image analysis in an automated manner using one or more algorithms by running a computer (sub-)program with corresponding instructions in a working memory of the one or more processors.

In an embodiment, the computer system comprises one or more method repository/library, wherein sub-programs comprising instructions for one or more of image pretreatment, model training, image analysis, data processing, etc., can be stored to be retrieved by the one or more processors and run as needed.

In an embodiment, trained models are stored for later use in a model repository of the computer system.

In an embodiment, one or more of the data, method and / or model repositories can be connected to the computer system using a transmitter unit.

Many algorithms for image analysis are known in the art; algorithms adapted to the solution described herein are detailed below.

As already mentioned, computer-implemented image analysis comprises:
Assigning each image pixel of the image data to seeds or background;
Selecting image part comprising the pixels assigned to seeds;
Analyzing the image part comprising the pixels assigned to seeds, using one or more models / algorithms for image-based determination of values for the sample.

### Image segmentation

In a first subprocess (also referred to as image segmentation), each pixel of the image data is assigned to seed or background using a segmentation algorithm.

Unsupervised assigning of pixels to seeds or background can be achieved by performing e.g. k-mean, k-nearest neighbours, DBSCAN methods, unsupervised trained classification networks, autoencoders, variational autoencoders or one or more trained classification networks, e. g. GAN networks.

Each seed comprises a group of pixels with similar spectral signatures; it can be characterized by its cluster centroid, TWCV and assigned a class label (e. g. seed / background or seed yes/no). Image pixel assigned to seeds are further referred to as "seed pixel".

In an embodiment, assignment of pixel to seed or background can be achieved using a deep convolutional neural network (CNN) trained for image segmentation and configured to output a B&W segmentation map with two classes seed or background. Examples of deep convolutional neural network (CNN) and training thereof are further described below.

In an embodiment, an Encoder-Decoder Neural Network can be used to assign pixels to seed or background.

In an embodiment, a U-Net CNN model is used as a powerful encoder-decoder model. Alternatively, a SegNet deep CNN model can be used to perform image segmentation (ref. https://ieeexplore.ieee.org/abstract/document/7803544).

In an embodiment, a customized version of the U-Net convolutional network/model (U-Net CNN) described by Ronneberger et al. is implemented to segment the seed region [Ronneberger et al., (2015): U-Net: Convolutional Networks for Biomedical Image Segmentation. In: Navab, N., Hornegger, J., Wells, W., Frangi, A. (eds) Medical Image Computing and Computer-Assisted Intervention - MICCAI 2015. MICCAI 2015. Lecture Notes in Computer Science, vol 9351. Springer, Cham. https://doi.org/10.1007/978-3-319-24574-4_281]. This algorithm was chosen for its exceptional performances in several semantic segmentation tasks in biological and biomedical applications [Ali et al., (2020): Predictive Modeling of Antibiotic Susceptibility in E. Coli Strains Using the U-Net Network and One-Class Classification, in IEEE Access, vol. 8, pp. 167711-167720, 2020, doi: 10.1109/ACCESS.2020.30228292; Sodjinou et al., (2022): A deep semantic segmentation-based algorithm to segment crops and weeds in agronomic color images, information Processing in Agriculture, Volume 9, Issue 3, Pages 355-364].

In an embodiment, the customized version of the U-Net CNN model was trained from scratch on a training set of segmented images of seed samples.

In an embodiment, the training set of segmented images is obtained by way of manually segmenting images of seed samples using an image processing tool. Manual segmentation typically comprises cropping seed region by (automatic) thresholding, then performing morphological features (protrusion and concavity of each seed, curvature of the seed boundary, roughness, and / or non-smooth surface, etc....) to determine the best seeds region(s). In an example FIJI-ImageJ tool was used for manual segmentation of training images of seed samples. Then these seed sample images with the corresponding segmented images were used to train the U-Net model from scratch, wherein training the CNN from scratch comprises varying one or more of input image size, number and order of CNN layers, training options, etc.... [Training A Model From Scratch - MATLAB & Simulink (mathworks.com); htts://de.mathworks.com/solutions/deep-learning/examples/training-a-model-from-scratch.html].

In an embodiment, the proposed version of U-Net CNN model was trained once on 25 images of OSR seed samples; the obtained trained U-Net mode1, can be used to select the seed region and create a heatmap of the seed region for new images within 1 second.

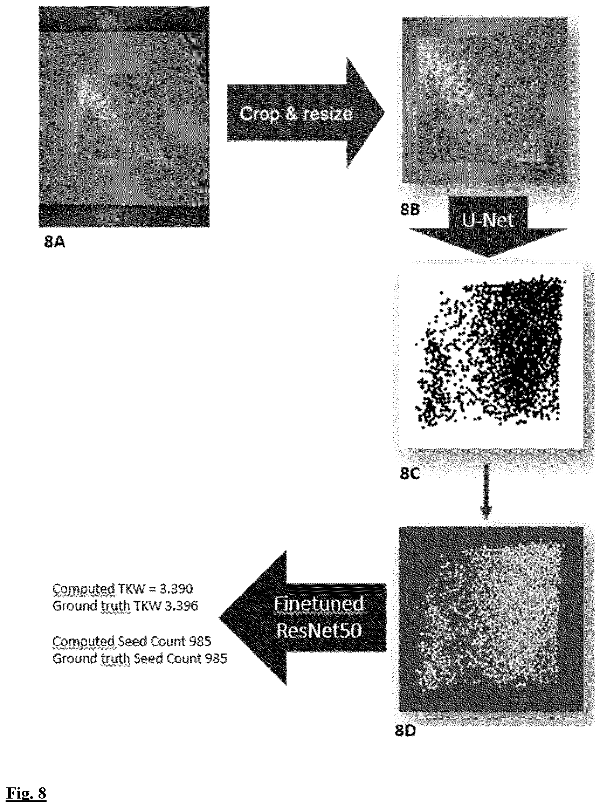

In an embodiment, the solution is configured to create a spatial heat map for the segmented seed region. A heat map (or heatmap) is a data visualization technique that shows magnitude of a phenomenon, for example color, in two dimensions. The variation in color may be by hue or intensity, giving obvious visual cues to the user about how the phenomenon is clustered or varies over space. Generating a heatmap of the segmented seed region images allows better visualization of the seed edges of segmented images. In an embodiment, a continuous heatmap is created to avoid very pixelized 1image. Figure 8c shows an example of a spatial continuous heatmap image generated from an image segmented by the trained U-Net CNN model.

In an embodiment, the solution is configured for causing display of the heatmap(s).

### Seed size

In an embodiment, average seed sizes can be determined by way of dividing the number of pixels assigned to seeds, by the number of centroids identified by the segmentation algorithm. In an embodiment, the segmentation algorithm is configured for counting the pixels assigned to each identified centroid; number of pixels for each centroid is seed size. Average seed size, seed size range and / or seed size distribution can be computed for a sample based on determined singular seed size.

Narrow distribution of seed size for a seed sample for an area or sub-area is a sign of homogeneous crop maturation. Abnormalities in seed size distribution for a sample, an area or sub-area may be used to warn user that attention is needed and / or disregard image for analysis.

In other words, size analysis can be used as quality check to improve reliability of model-based measurement by image analysis described below.

### Color analysis

In an embodiment, the one or more processors are configured for estimating average color, color range and / or color distribution for a seed sample, or for a seed batch. Narrow color distribution for an area or sub-area is a sign of homogeneous crop maturation.

Narrow color distribution for a seed sample / for a seed batch is also advantageous for the robustness of the method. In an embodiment, abnormalities in color distribution for a sample, an area or sub-area can be identified by thresholding and used to warn user that the validity of the color-based measurements is at stake and / or attention is needed. In an embodiment, thresholding can be used to sort out images with abnormal color distribution.

In other words, color analysis can be used as quality check to improve reliability of model-based measurement by image analysis described below.

### Color-based moisture estimation

For crops wherein the seed moisture content correlates with seed color, the seed color information from the color image of a seed sample can be used for computer-implemented estimation of seed moisture content value of the seeds. It is preferable that color images are captured with the imaging device described above for reproducible imaging conditions in the color range of interest.

In an embodiment, a sub-program comprising instructions is used for computer-implemented indirect estimation of a moisture content value for a seed sample based on analysis of seed color values in a color image of the seed sample.

In an embodiment, said color-based estimation of moisture content value comprises inputting part of image assigned to seeds, and optionally image metadata as needed, into an algorithm/ a model configured for estimation of moisture content value based on image feature (seed color) values of seed pixels. This algorithm is further referred to as "moisture content model".

In an embodiment, the moisture content model can be one or more machine learning algorithms, in particular neural networks (NN). In an embodiment, one or more machine learning algorithms trained as regressor. Two different types of NNs were tested: Convolutional NNs (CNN) and transformer-based NNs. Specifically, examples of tested CNNs are mobile net, vanilla network, inception v3, and ResNet50. Among the transformer-based NNs, the vision transformer method was tested. In an embodiment, ResNet50 convolutional neural network model. In the example described below for OSR seeds, ResNet50 convolutional neural network model resulted in the best mean squared error (MSE). The tested vision transformer method was found to require more seed images for training, which may be a problem when limited image data is available (only one harvest season for example).

In an embodiment, supervised correlation between image feature (seed color) values and moisture content value is achieved using trained CNN, e.g. ResNet50, as moisture content model. Training of moisture content model is achieved by self-learning CNN with a training algorithm for feature discovery in a training data set. Trained models can be stored for later use in a model repository as described above.

In an embodiment, the moisture content model is trained using a training algorithm and a training data set to learn extracting features for correlation between seed color values (image feature values) with moisture content value (measurement of interest).

A training data set for training of the moisture content model comprises color image data for several seed samples and at least ground truth for moisture content value for each seed sample as metadata, wherein the ground truth moisture content value for each imaged seed sample is obtained separately using established method of measurement for said value. Ground truth moisture content value or moisture content value of ground truth refers to a value measured by a ground truth measurement method for seed moisture content established in the field; ground truth measurement method can be invasive or non-invasive. Typically, it is a method conducted in a laboratory requiring more or less efforts, equipment and expertise.

In an embodiment, a training data set for training the moisture content model comprises color images of seed samples at different ripeness/maturity period (time point) comprising an adequate number of seeds and respective ground truth moisture content values, so training data cover the whole color range for the seeds of interest.

In an embodiment, samples with ground truth moisture content values in increments of around 5-10 % are considered for building the training data set.

In another embodiment, samples for training data set are collected on regular basis during one or more crop seasons (e. g. daily) in the area(s) of interest, typically starting when the seeds are separable.

In an embodiment, ground truth for moisture content value is obtained by thermogravimetric measurement with a determined number of seeds. Gravimetric measurement method typically comprises machine-counting the number of seeds in the sample, weighing the seed sample before and after drying the seed sample in an oven under defined conditions, and determining a seed moisture value, wherein the seed moisture content value equals seed weight loss after drying.

In an embodiment, a training data set is prepared, said training data set comprising color images of seed samples and respective ground truth moisture content value as measured by a ground truth measurement method. The seed samples for the training data set are selected within a range from moisture content value from high moisture content values (exhibited by humid, unmature, separable seeds) to low (harvestable seeds) and respective ground truth moisture values. In other words, training data comprises images for seed samples from the time point at which seeds can be separated by user for good quality image acquisition.

In an embodiment, it is preferred that a moisture content model is trained for each seed genotype (inbreeds). In this embodiment, image data comprises seed genotype, typically introduced by user, and saved as metadata. For new seed sample images, seed genotype information is used by for selection of moisture content model out the model repository; selected model is used for image analysis and model-based determination of moisture value.

In an embodiment, genotype metadata of the seed sample is considered as influencing factor for the model in the training data set. In other words, training data set comprises color image data and ground truth moisture content value for seeds samples for different genotypes. In an embodiment 20-30 genotypes are considered for training.

In an embodiment, the training data set is designed to comprise several samples for each condition, one condition being a combination of a given moisture content for a given genotype. For each condition, several batches of seeds/seed pods of each genotype are harvested at the same time at the same location. Samples for the same condition are together referred to as batch, typically a batch comprises two samples.

In an embodiment, further influencing factors for training of the moisture content model can be one or more of the locations of the seed sample acquisition, year to year variability, and weather conditions, etc.

In an embodiment, a training data set can be selected to comprise one or more representative locations for an area, field, growing region and / or macrozone.

In an embodiment, a training data set can be selected to comprise image data and ground truth data from different years to check the year-to-year variability and germination rate.

In an embodiment, a ResNet50 CNN is trained from scratch to perform as an image regressor on color images of the seed sample as acquired and evaluate a moisture content value for each seeds image. In an embodiment, the pretrained ResNet50 CNN model is fine-tuned by adding batch normalization layer, average pooling layer, dense layer, and dropout layer to improve the CNN learning and overcome the model overfitting.

According to good practice, performance evaluation of the trained model is tested after training using a data set comprising color images of seed samples with known ground truth for moisture content value of the seed samples. In an embodiment, leave-one-batch-out cross-validation concept (LOBO-CV) is used to evaluate the performance of the trained models, in which one ground truth moisture content value for each batch is determined and used once as validation set. Color images of the validation data set are introduced to the trained model; average of determined color-based moisture values for a batch is compared with known ground truth of moisture content value for a batch. In an alternative embodiment, the collected imaging dataset is divided into two splits: training set and test set. Therein, the model is trained in the training set. Thereafter, the ground truth and the moisture determination based on the trained model are compared to evaluate the performance of the test set. This method is usually known as training-test split validation technique.

In an embodiment, for offline implementation of the solution on a device with limited computing ability, e. g. in a mobile application without cloud access to a computer system for image analysis, a ResNet50 model, is trained based on cropped color images of the seeds with the advantage to provide a light model to simplify the developments of the mobile app. Alternatively or additionally, a light customized version of a moisture content model can be used for running the solution in offline mode. For this purpose, a smaller model size is used to enable the offline app function. For example, TensorFlow Lite can be used instead of regular TensorFlow.

In an embodiment, the image data set for training the moisture content model comprises color images of similar size, wherein similar size is obtained by resizing the acquired images (pretreatment). It is preferred that the resizing parameters for the training data set are applied to new color image data for determination of moisture content value using the trained model.

Similarly, it is preferred to run a moisture content model trained with cropped color images on new color image data previously submitted to cropping pretreatment.

Model information for storage in the model repository therefore comprises pretreatment information applicable at model use. Model information may also comprise value on offline and / or cloud usability.

### Size-based TKW estimation

In an embodiment, the seed size information can be used for computer-implemented estimation of TKW value for dried seeds from color images, preferably captured with the imaging device described above for reproducible imaging conditions in color range of interest.

In an embodiment, said size-based TKW value estimation for a seed sample comprises preprocessing image data of said seed sample (pretreatment described above; mainly the heatmap generation and images cropping and resizing) and inputting preprocessed image data, and image metadata as needed, into an algorithm/ a model configured for estimation of TKW value based on analysis of the seed assigned pixels in the image. This algorithm is further referred to as "TKW model".

In an embodiment, the TKW model can be one or more machine learning algorithms, in particular neural networks (NN), or convolutional networks (CNN). In an embodiment, one or more machine learning algorithms trained as regressor / trained for solving regression problem are used.

In an embodiment, supervised correlation between seed size and TKW value is achieved using trained CNN, e.g. ResNet50, as TKW model. Training of TKW model is achieved by self-learning CNN with a training algorithm for feature discovery in a training data set. Obtained trained models can be stored for later use in a model repository of the computer system or connected to the computer system.

In an embodiment, training is achieved using a model, a training data set, and a training algorithm for feature correlation. In an embodiment, a ResNet50 CNN model is finetuned. Its performance is evaluated based on training-test split validation (as described for color-based moisture estimation), wherein two image batches for each TKW value are used to train the ResNet50 and a third batch is used to evaluate the obtained trained model.

In an embodiment, a training data set for training the TKW model comprises images of seed samples at different ripeness/maturity period (time point) comprising an adequate number of seeds, and TKW value obtained for imaged seed sample by a ground truth measurement method. In other words, training data comprises images for seed samples from the time point at which seeds can be separated by user for good quality image acquisition. "Ground truth TKW value" or "ground truth for TKW value" refer to the value measured by ground truth measurement method for TKW.

In an embodiment, ground truth for TKW value is obtained by optimetric measurement using Opto-Agri von OptoMachines: https://optomachines.fr/home/optomachines-equipment-for-seeds-analysis/opto-agri-tsw-seed-biometry/. Said method comprises machine-counting the seeds of a sample. Optimetric measurement method using Opto-Agri from OptoMachines is established for TKW measurement on dry seeds. For ground truth TKW measurement of seeds, in particular immature/humid seeds, plants or plant pods are collected and first let dry in open air (simulating field swathing conditions) until that the seeds reach around 8% moisture content value (regular moisture content value for harvest time). Then the seeds are collected/cleaned and the ground-truth TKW is obtained using the Opto-Agri machine according to standard apparatus instructions. The skilled person will appreciate that other measurement method can be used for measurement of ground truth TKW for a seed sample; a measurement method established in the technical field is preferred.

In an embodiment, it is preferred that a TKW model is trained for each seed genotype. In this embodiment, image data comprises seed genotype, typically introduced by user, and saved as metadata. For new seed sample images, seed genotype information is used by for selection of TKW model out a model repository; selected model is used for image analysis and model-based determination of TKW value.

In an embodiment, genotype metadata of the seed sample is considered as influencing factor in the training data set. The training data set comprises images and ground truth TKW value for seeds samples for different genotypes. In an embodiment, 20 to 30 inbreeds are considered.

In an embodiment, further influencing factors can be considered for training of the TKW model, examples are mentioned above for the moisture content model.

In an embodiment, model information for storage of a trained TKW model in the model repository comprises pretreatment information applicable at model use.

### Moisture dependent TKW estimation

In an embodiment, the seed color and the seed size information can be used for computer-implemented estimation of a moisture dependent TKW value from color image(s) of a seed sample.

In an embodiment, image-based estimation of characteristic value for a seed sample comprises inputting color image data preprocessed as described above, including optional metadata, into an algorithm/ a model trained for determination of TKW value in relation to moisture content value based on feature extraction from color image data, said feature extraction considering at least seed color and seed size, optionally metadata for the seed sample. This algorithm/model is further referred to as "moisture dependent TKW model". The embodiment aims to predict, from data (images and metadata) collected for the seed sample comprising immature/humid seeds (green and swallowed with water), the TKW the seed sample would have after the plants are swathed, dried and ready to harvest i.e. when the seeds are dried/mature (black and around 8% moisture).

In an embodiment, the moisture dependent TKW model can be one or more machine learning algorithms, in particular neural networks (NN). In an embodiment, one or more machine learning algorithms trained as regressor / trained for solving regression problem are used. Specifically, examples of CNNs are mobile net, vanilla network, inception v3, and ResNet50. Among the transformer based NNs, vision transformer method can be used.

In an embodiment, supervised correlation between image features like object area and color, moisture content value and TKW value can be achieved using trained CNN, e. g. ResNet50, as moisture dependent TKW model.

In an embodiment, training of a moisture dependent TKW prediction model is achieved by self-learning CNN with a training algorithm for feature discovery in a training data set.

Additionally or alternatively, one or more mechanistic model(s) can be generated that correlate the seed color with specific moisture content value and specific time point with a TKW value of dry seeds after harvest.

Trained/generated models can be stored for later use in a model repository of the computer system, or in a model repository connected to the computer system.

In an embodiment, said moisture dependent TKW model is obtained by training/generating a model with a training data set comprising image data for seed sample and at least measured ground truth TKW value and ground truth moisture content value as metadata and a training algorithm for feature correlation. Training data comprises color images of a plurality of samples comprising humid or mature seeds, wherein ground truth moisture content value and ground truth TKW value were measured for each sample. For generating a training data set, seed samples comprising an adequate number of seeds are collected at different ripeness/maturity period (time point t); ground truth values are obtained for imaged seed samples by respective ground truth measurement methods described above.

In an embodiment, the moisture dependent TKW model is trained with one or more additional influencing predictors. In an embodiment, influencing predictors are one or more of the metadata selected from seed genotype, time point of image acquisition in crop season, location of sample acquisition (field, field plot, sampling coordinates), weather data, historical field management information (field treatment, irrigation, soil information or the like), landscape information (orientation, topography, shadowing, ponding information, etc.).

In an embodiment, model information for storage in the model repository comprises one or more additional influencing predictors as parameters to be considered/ parameter values to be acquired for use of the moisture dependent TKW model on new images.

In an embodiment, influencing predictor is genotype of the seed sample considered in the training data set. The training data set comprises images and ground truth values for seeds samples for different genotypes. In an embodiment, 20 to 30 inbreeds are considered.

In an embodiment, influencing predictors is location of sample acquisition (related to landscape, soil, climate information for the location). The training data set comprises images and ground truth values for seeds samples at different locations.

In an embodiment, the training data set comprises image data and related metadata over several crop seasons for better training.

The skilled person will appreciate that the seed growing process can be influenced by many factors; it may be advisable to retrain the models for value determination when valuable new data, in particular for a new season for a location or an area, become available, for better consideration of model influencing factors.

### Running the solution on a new sample

In an embodiment, the solution described above is used for new color images of a seed sample.

In an embodiment, user may select one or more measurement(s) and / or data processing of interest from a list of available determination based on acquired images. The one or more processors are configured to run sub-processes based on selection and cause presentation of corresponding results.

In an embodiment, the one or more processors are configured to prompt the user for metadata entry and / or to cause (automatic) acquisition of values for influencing predictors from external sources (e.g. from data repository, external services, sensors, etc...) in consideration of selected measurement or data processing and / or definitions relating to sub-area(s) or area(s) for example limits thereof. Routines for such data acquisition are well known in the art.

In an embodiment, user can select determination of seed information for one or more of sample location(s), sub-area(s) or area(s) comprising the sample location(s).

In an embodiment, user can instruct storage of images and metadata in the data repository, e. g. for a crop season. Metadata for storage can comprises input metadata described above and / or measurements determined by the solution.

### Results and further data processing

In the present application, "results" comprises one or more estimated values obtained from the computer-implemented analysis of image data.

As it is preferred that more than one images are acquired for each seed sample, eventually a set of images is acquired for a sample. In an embodiment, image analysis is conducted on each image of the set; results of image analysis can be averaged for the seed sample.

The one or more processors can be configured for causing display and / or transmission of the results. Said results can be provided to the user via peripherals. Additionally or alternatively, result can be further used for computer-implemented determination of further field relevant values and/ or to generate scripts for controlling one or more field management devices (together referred to as further data processing).

In an embodiment, that the one or more processors can be configured to send an alarm signal if the automated analysis of the image data shows that a specific target value has been identified, for example estimated values being below and / or above predefined thresholds. Specific targets may be one or more of target moisture content value for pre-harvest, target moisture content value for harvest, target TKW value for (pre-)harvest, but not limited thereto.

In an embodiment, user can select one or more mode of presentation for the results. Examples of options and related sub-processes for data processing are further described below. However, the solution is not limited thereto.

In an embodiment, the result of image analysis is estimated value for each seed image. As already mentioned, it is preferred that several images are acquired for a seed sample from different sides (obtained by wobbling the image device between images). Alternatively or additionally, batch may be used, that is several samples may be acquired and imaged for a location. In other words, color images may show color variations.

In an embodiment, the solution comprises further data processing for the estimated values. Further data processing can comprise one or more of:
Averaging estimated moisture content values for a seed sample and / or for a batch;
Determining a moisture content value range for a seed sample and / or for a batch; and / or
Determining a variability of the determined seed moisture content value for a seed sample.

When running the solution for an area or subarea, and data are acquired at several location further data processing may comprise determining averaged value, value range or value distribution for the area or sub-area.

In an embodiment, the solution is configured to generate one or more maps of the area comprising markings of sampling location(s) and / or distribution of the parameter values determined by image analysis (moisture, TKW, moisture-based TKW, seed color, seed size) for the area.

In an embodiment, the system may be configured to identify sub-areas or locations, wherein sampling and / or batch sampling may be advantageous or advisable.

In an embodiment, user can instruct determination of seed information for one or more areas or sub-areas.

In an embodiment, the system may be configured for:
Acquiring, from a data repository, determined values for a seed sample parameter at a plurality of locations within an area or sub-area;
Estimating a variability for the one or more determined values for seed samples within the area or sub-area; and / or
Creating a map for the one or more determined values for seed samples within the area or sub-area.

In an embodiment, the system may be configured to issue a warning when said variability is beyond a predefined threshold, for example but not limited to providing advice/recommendation for field management measure.

In an embodiment, recommendation for a field management measure for one or more sub-areas can be displayed on a map.

In an embodiment, color images and metadata are acquired over time of a crop season.

In an embodiment, results of value determination as described above can be stored in a data repository. Best is storing determined value(s) with corresponding color images.

In an embodiment, the one or more processors can be configured to build one or more curves for determined values over time by way of:
Acquiring, by the computer system from a data repository, determined values for a seed sample parameter at a plurality of time points t-x to t for a crop season at a location of interest;
Generating a temporal measurement curve of the determined values for the season from the time point t-x to time point t for the crop season.

In an embodiment, the one or more processors are configured to cause display of the one or more of the determined single values and / or curves using a peripheral.

In an embodiment, the solution can be implemented to provide a time proposal for field management measure based on a forecasting for one or more of the parameter values determined by image analysis described above (moisture content, TKW, moisture dependent TKW, seed color, seed size).

### Forecasting change for seed information / supporting timing for field management measures

In an embodiment, the solution is configured for determining evolution of one or more of determined seed parameter values - moisture content value, TKW value, moisture content dependent TKW value, seed size, and / or seed color - over time based on estimated seed information described above in consideration of forecast for influencing factors (weather forecast, irrigation plan, or the like).

In an embodiment, evolution is determined using previous determined values of the crop season to create a temporal measurement curve for the season.

In an embodiment, the solution is implemented to predict evolution of one or more of determined seed parameter values within a forecast period t+y (also referred to as prediction period t+y) after time point t of last measurement of said seed parameter value (image acquisition).

In an embodiment, forecasts are created for a future prediction period t+y, wherein y is 1 to 20 days into the future, more preferably for y of 1 to 10 days into the future (also referred to as forecasting period).

In an embodiment, for the purpose of forecasting, the solution further comprises:
From a data repository, acquiring, by the computer system, determined values for a seed sample parameter at a plurality of time points t-x to t for a crop season at a location of interest;
Generating a temporal measurement curve of the determined values for the season from the time point t-x to time point t for the crop season;
Acquiring, by the computer system, for the location, one or more of climate data, weather data and field data for a future period t+y;
Extrapolating the temporal measurement curve for the future period t+y in consideration of the one or more of climate data/, weather and / or field data for the location using an algorithm.

Climate data as used therein refers to as averaged temperature, humidity, atmospheric pressure, wind, and precipitation over a long period for a location.

Weather data as used therein refers to current weather, weather in the previous days, weather forecast for the next few days - that can be acquired from weather data services.

Field data refers to data acquired from field sensors; field data can comprise field weather data acquired from sensors for weather parameter (rain gauge, thermometer, soil sensors, and the like).

In an embodiment, the one or more processors are configured to compare weather data from weather services and field weather data acquired from field sensors. In an embodiment, the one or more processors are configured to cause warning the user that weather or climate data may false forecasting, e. g. in case weather data, climate data and field data are inconsistent or in case required prediction period is beyond reliable forecasting period.

In an embodiment, forecasting can be obtained using a model configured to determine (positive or adverse) effects weather could have on the seed moisture content value, the TKW value, the moisture dependent TKW value, etc....

An example of a solution for a machine learning-based seed harvest moisture predictions to improve computer-assisted agricultural farm operation is described in WO2020/086750 for corn seeds. One or more of the seed values, in particular moisture content value, determined by the solution described herein can be used in the solution described in WO2020/086750.

In an embodiment, the one or more processors can be configured to identify a measure for field management which can be recommended to the user. For example, but not limited to, the one or more processors may be configured to determine a proposal for watering, pre-harvesting and / or harvesting time point or favorable period for the deployment of other field management measure. If growing/maturing effects of the coming weather on the seed are determined to be predominant, the solution may advise postponing harvesting or pre-harvesting.

In an embodiment, the user may select the field management measure for implementation by an agricultural device.

In an embodiment, the solution can be configured to generate scripts for controlling an agricultural device.

In an embodiment, image analysis is conducted by the smartphone using a computer program comprising necessary processors and instructions.

The computer system can comprise or be connected to peripherals for displaying test images, acquired images and / or results of image analysis. The system can comprise peripherals for displaying test images, acquired images and / or results of image analysis. The system can be configured to receive the results of image analysis from a remote computer system for display to the user on said peripheral.

In an embodiment, the device and / or the computer system can comprise a data repository for storage of the seed sample images and / or results of analysis thereof.

### Objects of the application are therefore:

A system comprising:
One or more peripherals;
One or more data repository;
One or more processors configured for:
   Causing receiving image data from a scene comprising a seed sample of a plurality of seeds, said image data comprising quantized values representing color of image pixels;
   Assigning each image pixel of the image data to seeds or background using a segmentation algorithm;
   Analyzing the part of the image pixels assigned to seeds, by way of one or more of:
      Determining, using a moisture content model trained to solve a regression problem of correlating image features with seed moisture content value, a seed moisture content value for the seed sample based on feature analysis of the image pixels assigned to seeds; and / or
      Determining, using a TKW model trained to solve a regression problem of correlating image features with TKW value, a TKW value for the seed sample based on feature analysis of the image pixels assigned to seeds;
   Causing output of one or more of the determined value(s).

In an embodiment, the system further comprises peripherals.

In an embodiment, the one or more processors are configured for acquiring metadata for the image data, said metadata being one or more of identification for seed sample, seed genotype, sample location, time point of image acquisition, weather data, historical field management information, and / or landscape information.

In an embodiment, the one or more processors are configured for pretreatment of the image data, said pretreatment comprising one or more of:
Checking if a seed count value for the plurality of seeds is within a defined seed count range;
Determining a blurriness coefficient for the image and filtering out images which blurriness coefficient is below a defined threshold;
Cropping image data as defined by cropping parameters;
Resizing image data as defined by resizing parameters.

In an embodiment, the moisture content model and / or the TKW model are machine learning algorithms.

In an embodiment, the one or more processors are configured for generating the trained moisture content model and / or the trained TKW model by way of:
Acquiring a training data set comprising color image data of a scene comprising a seed sample of a plurality of seeds and ground truth value for moisture content or TKW respectively measured for the seed sample using a ground truth moisture measurement method;
Introducing the training data set into a model and training the model for feature extraction using a training algorithm to obtain a trained model;
Saving the trained model in the model repository.

In an embodiment, the one or more processors are configured for determining a moisture-dependent TKW value based on feature analysis of the image pixels assigned to seeds using a moisture-dependent TKW model trained to solve a regression problem of correlating image features with TKW value in relation with seed moisture content value.

In an embodiment, the one or more processors are configured for generating the trained moisture-dependent TKW model by way of:
Acquiring a training data set comprising color image data of a scene comprising a seed sample of a plurality of seeds and at least both ground truth moisture content value and ground truth TKW value measured for the seed sample using a ground truth moisture measurement method and a ground truth TKW measurement method respectively;
Introducing the training data set into a model and training the model for feature extraction using a training algorithm to obtain a trained moisture content model;
Saving the trained moisture-dependent TKW model in a model repository.

In an embodiment, the one or more processors are configured for estimating one or more seed size values, by way of:
Determining a total number of pixels assigned to seeds in the image;
Determining centroids for the pixels assigned to seeds by the segmentation algorithm;
Determining a number of identified centroids;
Counting for each centroid the number of pixels assigned to the centroid;
Determining a range for seed size values based on the counted number of pixels per centroid; and / or
Determining an average seed size by dividing the total number of pixels assigned to seeds by the number of centroids;
Causing output of the one or more seed size values.

In an embodiment, for image data of a seed sample collected at time point t, the one or more processors are configured to predict evolution of one or more of determined seed parameter values within a prediction period t+y by way of:
From a data repository, acquiring one or more of the determined values for a seed sample parameter at a plurality of time points t-x to t for a crop season at a location of interest;
Generating a temporal measurement curve of the determined values for the season from the time point t-x to time point t for the crop season;
Acquiring, for the location, one or more of climate data, weather data and field data for a future period t+y;
Extrapolating the temporal measurement curve for the future period t+y in consideration of the one or more of climate data/, weather and / or field data for the location using an algorithm.

In an embodiment, the system further comprises one or more imaging device, said imaging device comprising:
A seed collecting region configured to receive a seed sample;
An opaque chamber delimited by a chamber floor comprising the seed collecting region and a chamber top connected by chamber side walls between the chamber floor and the chamber top;
An imaging unit comprising a camera positioned to acquire one or more images of a scene comprising at least part of a seed sample positioned in the seed collecting region.

In an embodiment, the system further comprises a control unit connected to a peripheral, said control unit comprising one or more processors configured for one or more of:
Prompting user on the peripheral for introducing or confirming identificator for seed sample;
Prompting user for wobbling the imaging device and triggering the imaging unit of the imaging device to generate images of the seed collecting region after wobling;
Checking positioning of the seeds on the seed imaging surface by way of activating a light source and / or a function of test imaging; and / or
Prompting user on the peripheral that image acquisition is completed;
Prompting user on the peripheral that (new) sample can be introduced.

In an embodiment, the system can comprise a transmitter unit, and the control unit can be configured for triggering the transmitter unit to send the images and/or information regarding the images via a network to one or more device or computer system for image analysis, display of the information, estimated seed information and/or generating instructions for a field management device.

Further object of the application is a computer-implemented method comprising:
Causing receiving image data from a scene comprising a seed sample of a plurality of seeds, said image data comprising quantized values representing color of image pixels;
Assigning each image pixel of the image data to seeds or background using a segmentation algorithm;
Analyzing the part of the image pixels assigned to seeds, by way of one or more of:
   Determining, using a moisture content model trained to solve a regression problem of correlating image features with a seed moisture content value, a seed moisture content value for the seed sample based on feature analysis of the image pixels assigned to seeds; and / or
   Determining, using a TKW model trained to solve a regression problem of correlating image features with a TKW value, a TKW value for the seed sample based on feature analysis of the image pixels assigned to seeds;
   Causing output of one or more of the determined value(s).

In an embodiment, the computer-implemented method further comprising one or more of:
Checking if a seed count value for the plurality of seeds is within a defined seed count range;
Determining a blurriness coefficient for the image and filtering out images which blurriness coefficient is below a defined threshold;
Cropping image data as defined by cropping parameters;
Resizing image data as defined by resizing parameters.

In an embodiment, the moisture content model and / or the TKW model are machine learning algorithms.

In an embodiment, the computer-implemented method further comprises generating the trained moisture content model and / or the trained TKW model by way of:
Acquiring a training data set comprising color image data of a scene comprising a seed sample of a plurality of seeds and ground truth value for moisture content or TKW respectively, wherein said ground truth value is measured for the seed sample using a ground truth moisture measurement method;
Introducing the training data set into a model and training the model for feature extraction using a training algorithm to obtain a trained model;
Saving the trained model in the model repository.

In an embodiment, the computer-implemented method further comprising determining a moisture-dependent TKW value based on feature analysis the image pixels assigned to seeds using a moisture-dependent TKW model trained to solve a regression problem of correlating image features with TKW value in relation with seed moisture content value.

In an embodiment, the computer-implemented method according further comprises generating the trained moisture-dependent TKW model by way of:
Acquiring a training data set comprising color image data of a scene comprising a seed sample of a plurality of seeds and at least both ground truth moisture content value and ground truth TKW value measured for the seed sample using a ground truth moisture measurement method and a ground truth TKW measurement method respectively;
Introducing the training data set into a model and training the model for feature extraction using a training algorithm to obtain a trained moisture content model; Saving the trained moisture-dependent TKW model in a model repository.

In an embodiment, the computer-implemented method further comprises estimating one or more seed size values, by way of:
Determining a total number of pixels assigned to seeds in the image;
Determining centroids for the pixels assigned to seeds by the segmentation algorithm;
Determining a number of identified centroids;
Counting for each centroid the number of pixels assigned to the centroid;
Determining a range for seed size values based on the counted number of pixels per centroid; and / or
Determining an average seed size by dividing the total number of pixels assigned to seeds by the number of centroids;
Causing output of the one or more seed size values.

In an embodiment, for image data of a seed sample collected at time point t, the method further comprises predicting evolution of one or more of determined seed parameter values within a prediction period t+y by way of:
From a data repository, acquiring one or more of the determined values for a seed sample parameter at a plurality of time points t-x to t for a crop season at a location of interest;
Generating a temporal measurement curve of the determined values for the season from the time point t-x to time point t for the crop season;
Acquiring, for the location, one or more of climate data, weather data and field data for a future period t+y;
Extrapolating the temporal measurement curve for the future period t+y in consideration of the one or more of climate data/, weather and / or field data for the location using an algorithm.

In an embodiment, the method further comprises:
Placing a seed sample on a seed collecting region of an imaging device, said imaging device comprising the seed collecting region configured to receive the seed sample, an opaque chamber delimited by a chamber floor comprising the seed collecting region and a chamber top connected by chamber side walls between the chamber floor and the chamber top, an imaging unit comprising a camera positioned to acquire an image of a scene comprising at least part of a seed sample positioned in the seed collecting region;
Triggering the imaging unit to generate one or more images of a scene comprising whole or part of the seeds collecting region, preferably the whole seeds collecting region; and
Acquiring the one or more images and transferring the one or more images to the one or more processors.

In an embodiment, the method further comprises one or more of:
Prompting user on the peripheral for introducing or confirming identificator for a seed sample;
Prompting user on the peripheral that a (new) sample can be introduced;
Triggering the imaging unit of the imaging device to generate one or more image of the seed collecting region;
Checking positioning of the seeds on the seed imaging surface by way of activating a light source and / or a function of test imaging; and / or
Prompting user on the peripheral that image acquisition is completed.

Further subject matter of the application is a computer program product comprising a computer program which can be loaded into a memory of a computer, where it prompts the computer to execute the method described above.

Further subject matter of the application is a non-transitory computer-readable media storing one or more sequences of instructions, which when executed cause one or more processors to execute the method described above.

### Figures and example:

The invention is elucidated in detail hereinafter by figures and examples, without any intention to restrict the invention to the features and combinations of features specified in the figures and examples.

### Short description of the figures:

Figure 1 shows a 3-dimensional schematic view of image acquisition device 1 (also referred to as imaging device) from above front.
Figure 2 shows a 3-dimensional view from above of an empty drawer and insert.
Figure 3 shows a detailed schematic view from above of an insert contained a seed sample.
Fig. 4 shows the architecture of system of the invention and its components.
Fig. 5 shows a flow chart summarizing the computer-implemented method for analysis of an acquired image of a seed sample.
Fig. 6 shows a flow chart of the computer-implemented method for training of a moisture content model with a training data set.

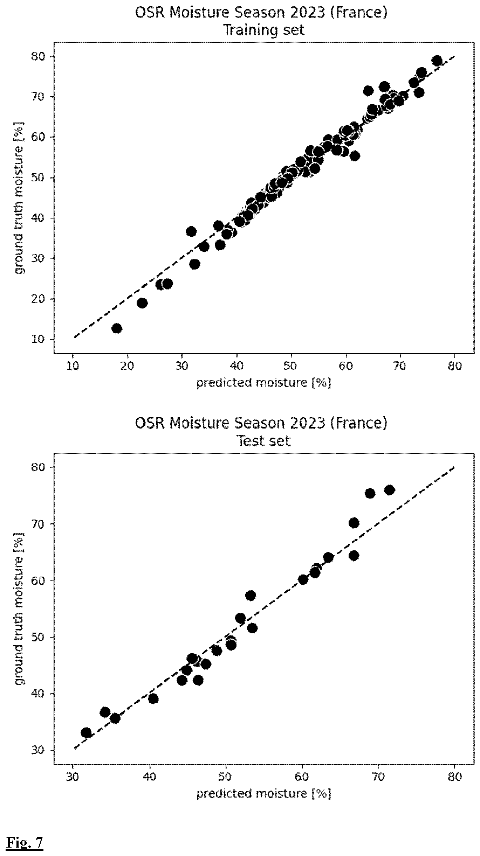

Fig. 7 shows the validity of the results obtained with the image-based method for moisture content measurement compared to ground truth measurement values.
Fig. 8 shows intermediary steps of the solution for image-based TKW determination implemented for OSR seeds and obtained results compared to respective measured ground truth.
Fig. 9 shows the correlation of computed seed count and ground truth seed count obtained with a seed counting machine.
Fig. 10 shows the validity of the results obtained with the image-based method for TKW value measurement compared to ground truth measurement values.

### References:

Image acquisition device (1)
Seed / Seed sample (2)
Chamber wall (5) delimiting a chamber room (6)
Drawer (7)
Drawer handle (8)
Insert (10)
Seed collecting region (11)
Structured surface of seed collecting region (11a)
Tilted walls (12)
Rills of tilted walls (13)
Imaging unit (20)
Holder for imaging unit (21)
Handle (30)

### Detailed description of the figures

The solution was implemented for computer-implemented analysis of RGB images of OSR seed sample comprising 300 to 1000 seeds per sample.

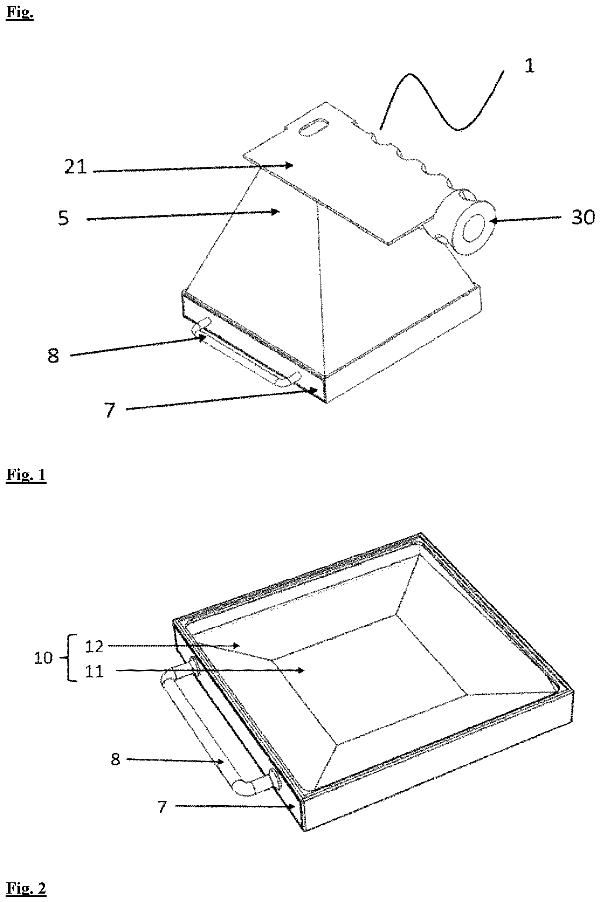

Figure 1 shows a 3-dimensional schematic view of Image acquisition device 1 comprising a drawer 7 which can be opened/closed by way of drawer handle 8. The chamber room 6 delimited by chamber walls 5 has a truncated pyramid form with square base. When closed, the drawer 7 covers the floor of chamber room 6. At the top of chamber room 6 (truncated top of the pyramid), an imaging unit 20 (not shown) is positioned in a detachable way using holder 21. Imaging unit 20 for use in the arrangement of Fig. 1 is a smartphone (not shown). For convenient handling of the device, the holder 21 is connected to an ergonomic handle 30. An eyelet 31 (not shown) can be added to handle 30 to insert a strap for easy carrying of the device 1 as a portable device 1.

Figure 2 shows details of drawer 7 wherein insert 10 comprising a planar seed collecting region 11 framed by tilted walls 12 is positioned. Drawer 7 can be opened/closed by way of drawer handle 8. The drawer 7 and insert 10 of Fig. 2 are square shaped.

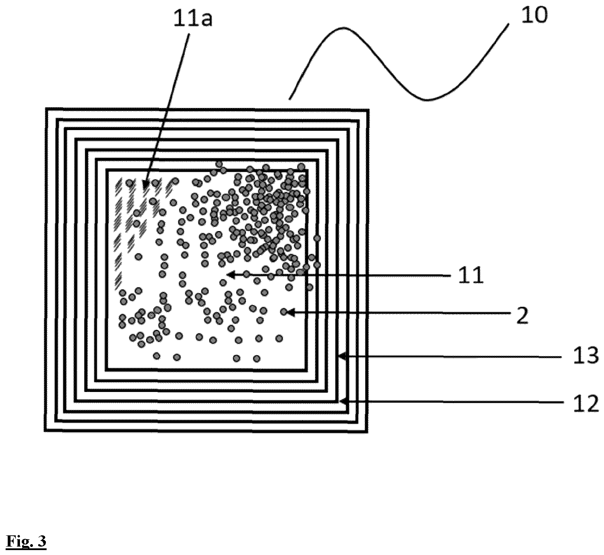

Figure 3 shows the tilted walls 12 and lowered corner of insert 10 for better controlled wobbling and pouring of seed sample 2 in and from seed collecting region 11.

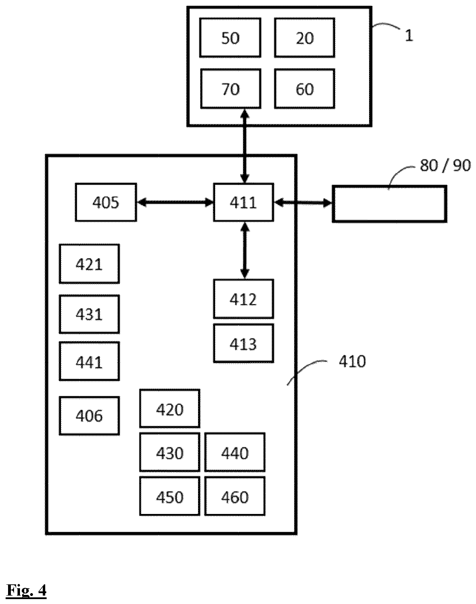

Fig. 4 show the architecture of system of the invention and its sub-processes, wherein:
Image acquisition device (1)
Imaging unit (20)
GPS unit (50)
User interface (60)
Control unit (70)
Weather data server (80)
Field sensors (90)
Data repository (405)
Model repository (406)

One or more processors 410 for:
411 Receiving image
412 Image pretreatment
413 Image segmentation
420 Model-based determination of moisture content value based on color image data
421 Training moisture content model
430 Model-based determination of TKW value
431 Training TKW model
440 Model-based determination of moisture dependent TKW value
441 Training moisture dependent TKW model
450 Determination of seed size
460 Further data processing

The skilled person will appreciate that the hardware hosting the imaging control unit, the one or more processors for image pretreatment and / or the one or more processors for image analysis may be separate devices connected with each other for transmission of data in one or both directions. System architecture is typically chosen depending on computing power needed/available for the respective computer-implemented subprocesses.

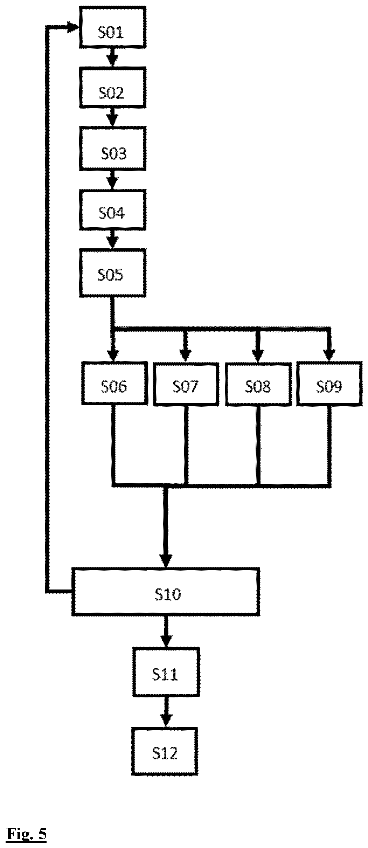

Fig. 5 shows an exemplary flow chart of the computer-implemented method for analysis of an acquired color image of a seed sample, wherein:
S01 Causing receiving color image data from a scene comprising seeds in the collecting region of the imaging device, said image data comprising quantized values representing color of image pixels;
Image pretreatment S02-S04
S02 Determining a blurriness coefficient for the image and filtering out images which blurriness coefficient is below a defined threshold; (Filtering blur image out is not shown)
S03 Cropping image data as defined by cropping parameters;
S04 Resizing image data as defined by resizing parameters
S05 Assigning each image pixel of the color image data to seeds or background using a trained U-Net segmentation algorithm, selecting image pixels assigned to seeds;
Analyzing the pixel assigned to seeds, by way of one or more of:
   S06 Determining a seed moisture content value for the seed sample based on analysis of the image pixels assigned to seeds using a moisture content ResNet50 model;
   S07 Determining a TKW value for the seed sample based on analysis of image pixels assigned to seeds using a TKW ResNet50 model;
   S08 Determining a moisture-dependent TKW value for the seed sample based on analysis of image pixels assigned to seeds using a moisture-dependent TKW ResNet50 model;
   S09 Determining seed size distribution for the sample;
   S10 Storing determined results of image analysis for further processing;
   Reiterating for new image for the seed sample until the set of images for a sample is analyzed; S11 Averaging results for the set of images for a seed sample;
   S12 Causing output of one or more of the determined result(s) for a seed sample and / or storage of said results in a data repository together with corresponding image data.

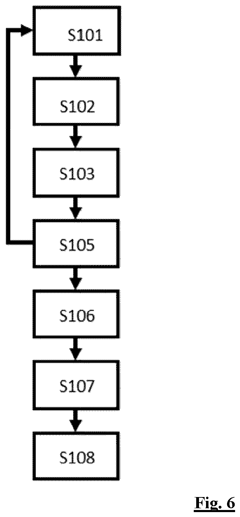

Fig. 6 shows a flow chart of the computer-implemented method for training of a ResNet50 model as a moisture content model described above, wherein.
S101 Acquiring training data set from data repository, said data set comprising a color image data and measured ground truth content value obtained using ground truth measurement method;
S102 Determining a blurriness coefficient for the image and filtering out images which blurriness coefficient is below a defined threshold; (Filtering blur image out is not shown)
S103 Cropping image with adequate blurriness coefficient as defined by cropping parameters
S104 Resizing image as defined by resizing parameters;
S105 Assigning each image pixel of the color image data to seeds or background using a segmentation algorithm; reiterating for the training data set
S106 Inputting training data set into ResNet50 model for finetuning;
S107 Training the model using a training algorithm optimizing features extraction from image data and metadata;
S108 Storing trained model and information related thereto in a model repository. Information related to the model comprises one or more of: imaging device information (camera information, focus), threshold for blurriness coefficient, cropping parameters, resizing parameters and the like.

The flow chart applies similarly for training of the TKW model and / or the moisture-dependent TKW model.

### Example - solution implemented for oilseed rape (OSR) seeds

The solution described above was implemented for oilseed rape seeds (OSR). Details of implementation are provided below. The skilled person will appreciate that the solution is not limited thereto.

### A/ Image acquisition

OSR seed samples were collected in a field at different maturity stage. Seeds were separated manually and deposited in a blue insert 10 engaged in drawer 7 of imaging device 1 described above comprising a smartphone Type iPhone SE 2020 alternatively SE 2022 (imaging unit) fixed at the top of the chamber room 6 for image acquisition. Drawer 7 was engaged in the drawer cabinet and closed, so chamber room 6 is tight to external illumination. A set of RGB images of seed samples positioned in the insert was acquired with the imaging unit. Said smartphone comprised a GPS module, an imaging control application comprising options and capabilities for introducing metadata relating to the seed sample, supporting image acquisition, conducting image acquisition, transmitting acquired data for later use, but not limited thereto. For each OSR seed sample collected in the field, 5 RGB images were acquired, wherein the imaging device 1 was wobbled between each image. Fig. 8A shows an example of a RGB image of a OSR seed sample in the collecting region of the imaging device.

Images were pretreated as described above. Fig. 8B shows an example of cropped and resized image with defined parameters.

### B/ Generating a training set of segmented images of seeds samples for training ofU-Net segmentation model

A training set of 25 segmented images of OSR seeds on background (blue collecting region) in RGB images was obtained by way of manually segmenting acquired images of seed samples using software solution FIJI-ImageJ for manual segmentation of training images. Then, these seed sample images with the corresponding segmented images were used to train a U-Net model from scratch, wherein training the CNN from scratch comprises varying one or more of input image size, number and order of CNN layers, training options, etc.... [Training A Model From Scratch - MATLAB & Simulink (mathworks.com); https://de.mathworks.com/solutions/deep-learning/examples/training-a-model-from-scratch.html]. Trained U-Net model and image processing parameters (cropping, resizing) were stored for later use in pretreatment of new images.

The obtained trained U-Net model was tested to select the seed region in new pretreated images and create a spatial heatmap of the seed region therein. Fig. 8C shows spatial heatmap obtained after segmentation of the preprocessed image using trained U-Net model; heatmap can be generated within 1 second, which is acceptable response time for user acceptance.

Fig. 8D shows spatial heatmap with color RGB filters showing color distribution of the segmented seeds.

### B/ Generating a seed moisture content model

A ResNet50 model was selected for moisture content model for computer-implemented analysis of RGB images of OSR seed samples.

### Training of ResNet50 model was achieved using training data set described below.

The training data set for generating the moisture content model was chosen to comprise RGB images of seed samples and respective metadata of 20-30 OSR inbreds, at different maturity status from humid to dry (moisture approximately from 65% to 30%, with increments of 5-10%).

The humid seeds were obtained from plants grown in an open field composed of independent plots of 4 rows of 9m long, with an interrow spacing of 0.6m. Each plot was planted with a different inbred. For each moisture value, 3 batches of 20 pods of each inbred were harvested and shelled to obtain a "seed sample" of approximately 500 clean seeds. For each seed sample 5 pictures were acquired with the imaging device using the method described above. The RGB images were preprocessed according to the parameters for cropping and resizing.

Ground truth moisture content was measured as following: for each imaged sample, ground-truth TKW was obtained with an OptoAgri machine from OptoMachines (https://optomachines.fr/home/optomachines-equipment-for-seeds-analysis/opto-agri-tsw-seed-biometry/). The ground-truth moisture was determined by measuring the weight of the sample before and after the incubation at 130°C for 2h (the method is destructive) using an oven from Chopin technologies (https://assets-global.website-files.com/63cf34956bc59159af577c42/63cf34956bc591ba0e57854b_EM10_leaflet_EN_2016 1208.pdf).

Acquired RGB images, respective ground-truth moisture for each batch were stored and used for training of an "aggregation moisture content model". Trained model was stored in a model repository for later use.

Obtained trained moisture content model was validated. Fig. 8 shows the correlation of computed (predicted) moisture content of OSR seed samples with ground truth for a crop season for a training data set with a finetuned moisture content ResNet50 model and validation data obtained using a test set of color images. Figures clearly show that, within range of interest (30 to 80% moisture content), the predicted/computed moisture value for the seeds are quite close to the ground-truth values obtained in laboratory measurements.

### C) Generating TKW model

A ResNet50 model was selected as TKW model for computer-implemented analysis of RGB images of OSR seed samples.

Training of ResNet50 model was achieved using training data set described below.

Samples of clean seeds with known ground truth TKW were provided for imaging. Known ground truth TKW had been obtained with an OptoAgri machine from OptoMachines (https://optomachines.fr/home/optomachines-equipment-for-seeds-analysis/opto-agri-tsw-seed-biometry/).

Four different inbreds with known ground truth TKW from the smallest available to the biggest available were used (3.0 - 7.5 g). The moisture of these seeds was generally around 8%; this samples are also referred to as "dry seed samples". Ground truth TKW was stored as metadata for each sample/image.

Samples of four inbred batches containing from 50 to 1000 seeds were prepared, with increments of 50 seeds using a seed counting machine (such as https://www.pfeuffer.com/de/produkt/contador). The number of seeds was stored as metadata for each sample as ground-truth number of seeds.

Five pictures were acquired for each sample with the imaging device according to the method described above.

In total, approximately 1200 images with respective ground truth TKW were used for training and approximately 900 images were used for testing/validating the TKW model; respective ground truth TKW were used for validation.

Experiments showed that the trained model runs more accurately with images of a seed sample of minimum 300 seeds.

Figure 8 shows the results of applying ResNet50 network as TKW model for OSR seeds. An example of image data transformation, from an RGB image as acquired to estimated values via intermediate images by applying the described algorithms is presented.

Accuracy of prediction results is satisfactory for both seed counting and TKW estimations compared to the methods of the art.

Results of image-based determined values for TKW and seed count compared ground truths for TKW and seed count show reliability of the method.

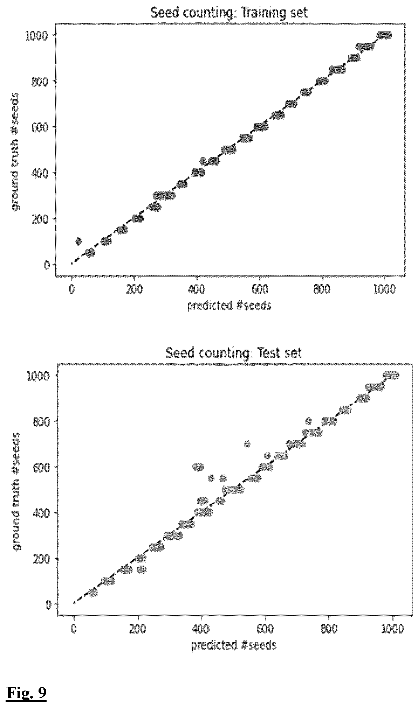

Fig. 9 shows data validating the solution for seed counting within range of interest (0 to 1000 seeds). The correlation of computed seed count obtained RGB images of seed samples and ground truth seed count obtained with a seed counting machine is shown for the training data set (upper curve) and a test set for validation (lower curve).

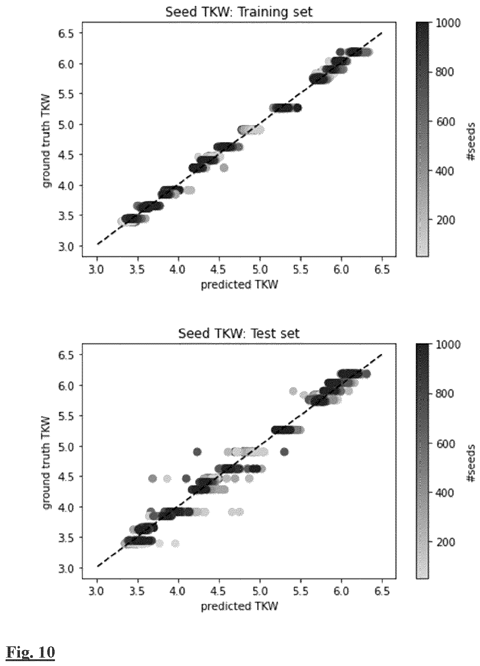

Fig. 10 shows validity of the results obtained with the image-based method for TKW measurement compared to ground truth measurement values within range of interest (30 to 65% TKW). Correlation curve between computed value and ground truth value is presented for the training data set (upper curve, root-mean-square error (RMSE) for training set: 0.05) and for a test set for validation (lower curve; RMSE for test set: 0.11).

Figures clearly show that the predicted TKW value for the seeds are quite close to the ground-truth values obtained in laboratory measurement for TKW as described above.

### D) Generating a moisture dependent TKW model

The TKW of dry seeds depends on when the plants have been swathed.

In an example, the method is implemented to predict, from data (images and metadata) collected for the seeds that are still immature/humid (green and swallowed with water), the TKW they would have after the plants is swathed, dried and ready to harvest i.e. when the seeds would be mature and dry (black and around 8% moisture).

A ResNet50 model is selected as moisture dependent TKW model for computer-implemented analysis of RGB images of OSR seed samples.

Training of ResNet50 model is achieved using training data set described below.

The training set is designed to comprise 2 samples for each condition, one condition being a combination of a given moisture for a given inbred. For each condition, 2 batches of 20 pods of each inbred are harvested at the same time in the same plot.

The first batch, also referred to as "immature seeds sample", is treated similarly as described above for the moisture content model: The humid seeds are obtained from plants grown in an open field. For each seed sample 5 pictures are acquired with the imaging device using the method described above. The RGB images are preprocessed according to parameters for cropping and resizing. Ground truth moisture content is measured as following: for each imaged sample, ground-truth TKW was obtained with an OptoAgri machine from OptoMachines (https://optomachines.fr/home/optomachines-equipment-for-seeds-analysis/opto-agri-tsw-seed-biometry/). The ground-truth moisture is determined by measuring the weight of the sample before and after the incubation at 130°C for 2h (the method is destructive) using an oven from Chopin technologies (https://assets-global.website-files.com/63cf34956bc59159af577c42/63cf34956bc591ba0e57854b_EM10_leaflet_EN_2016 1208.pdf).

The second batch, so called "dry seeds sample", is obtained by letting the plant/pods dry in open air (like regular field conditions) until that the seeds reach 8% moisture (regular moisture content value for harvest time). Then the seeds were harvested/cleaned and the ground-truth TKW was obtained using an OtipAgri machine as described above.

## Claims

1. A system comprising:
One or more peripherals;
One or more data repository;
One or more processors configured for:
Causing receiving image data from a scene comprising a seed sample of a plurality of seeds, said image data comprising quantized values representing color of image pixels;
Assigning each image pixel of the image data to seeds or background using a segmentation algorithm;
Analyzing the part of the image pixels assigned to seeds, by way of one or more of:
Determining, using a moisture content model trained to solve a regression problem of correlating image features with seed moisture content value, a seed moisture content value for the seed sample based on feature analysis of the image pixels assigned to seeds; and / or
Determining, using a TKW model trained to solve a regression problem of correlating image features with TKW value, a TKW value for the seed sample based on feature analysis of the image pixels assigned to seeds;
Causing output of one or more of the determined value(s).

2. The system of claim 1, wherein the one or more processors are configured for acquiring metadata for the image data, said metadata being one or more of identification for seed sample, seed genotype, sample location, time point of image acquisition, weather data, historical field management information, and / or landscape information.

3. The system of claim 1, wherein the one or more processors are configured for pretreatment of the image data, said pretreatment comprising one or more of:
Checking if a seed count value for the plurality of seeds is within a defined seed count range;
Determining a blurriness coefficient for the image and filtering out images which blurriness coefficient is below a defined threshold;
Cropping image data as defined by cropping parameters;
Resizing image data as defined by resizing parameters.

4. The system of claim 1, wherein the moisture content model and / or the TKW model are machine learning algorithms.

5. The system of claim 1, wherein the one or more processors are configured for generating the trained moisture content model and / or the trained TKW model by way of:
Acquiring a training data set comprising color image data of a scene comprising a seed sample of a plurality of seeds and ground truth value for moisture content or TKW respectively measured for the seed sample using a ground truth moisture measurement method;
Introducing the training data set into a model and training the model for feature extraction using a training algorithm to obtain a trained model;
Saving the trained model in the model repository.

6. The system according to claim 1, wherein the one or more processors are configured for determining a moisture-dependent TKW value based on feature analysis the image pixels assigned to seeds using a moisture-dependent TKW model trained to solve a regression problem of correlating image features with TKW value in relation with seed moisture content value.

7. The system of claim 6, wherein the one or more processors are configured for generating the trained moisture-dependent TKW model by way of:
Acquiring a training data set comprising color image data of a scene comprising a seed sample of a plurality of seeds and at least both ground truth moisture content value and ground truth TKW value measured for the seed sample using a ground truth moisture measurement method and a ground truth TKW measurement method respectively;
Introducing the training data set into a model and training the model for feature extraction using a training algorithm to obtain a trained moisture content model;
Saving the trained moisture-dependent TKW model in a model repository.

8. The system according to claim 1, wherein the one or more processors are configured for estimating one or more seed size values, by way of:
Determining a total number of pixels assigned to seeds in the image;
Determining centroids for the pixels assigned to seeds by the segmentation algorithm;
Determining a number of identified centroids;
Counting for each centroid the number of pixels assigned to the centroid;
Determining a range for seed size values based on the counted number of pixels per centroid; and / or
Determining an average seed size by dividing the total number of pixels assigned to seeds by the number of centroids;
Causing output of the one or more seed size values.

9. The system according to claim 1, wherein for image data of a seed sample collected at time point t, the one or more processors are configured to predict evolution of one or more of determined seed parameter values within a prediction period t+y by way of:
From a data repository, acquiring one or more of the determined values for a seed sample parameter at a plurality of time points t-x to t for a crop season at a location of interest;
Generating a temporal measurement curve of the determined values for the season from the time point t-x to time point t for the crop season;
Acquiring, for the location, one or more of climate data, weather data and field data for a future period t+y;
Extrapolating the temporal measurement curve for the future period t+y in consideration of the one or more of climate data/, weather and / or field data for the location using an algorithm.

10. A computer-implemented method comprising:
Causing receiving image data from a scene comprising a seed sample of a plurality of seeds, said image data comprising quantized values representing color of image pixels;
Assigning each image pixel of the image data to seeds or background using a segmentation algorithm;
Analyzing the part of the image pixels assigned to seeds, by way of one or more of:
Determining, using a moisture content model trained to solve a regression problem of correlating image features with a seed moisture content value, a seed moisture content value for the seed sample based on feature analysis of the image pixels assigned to seeds; and / or
Determining, using a TKW model trained to solve a regression problem of correlating image features with a TKW value, a TKW value for the seed sample based on feature analysis of the image pixels assigned to seeds;
Causing output of one or more of the determined value(s).

11. The computer-implemented method according to any one of the preceding claims, further comprising one or more of:
Checking if a seed count value for the plurality of seeds is within a defined seed count range;
Determining a blurriness coefficient for the image and filtering out images which blurriness coefficient is below a defined threshold;
Cropping image data as defined by cropping parameters;
Resizing image data as defined by resizing parameters.

12. The computer-implemented method according to any one of the preceding claims, wherein the moisture content model and / or the TKW model are machine learning algorithms.

13. The computer-implemented method according to any one of the preceding claims, further comprising generating the trained moisture content model and / or the trained TKW model by way of:
Acquiring a training data set comprising color image data of a scene comprising a seed sample of a plurality of seeds and ground truth value for moisture content or TKW respectively, wherein said ground truth value is measured for the seed sample using a ground truth moisture measurement method;
Introducing the training data set into a model and training the model for feature extraction using a training algorithm to obtain a trained model;
Saving the trained model in the model repository.

14. The computer-implemented method according to any one of the preceding claims, further comprising determining a moisture-dependent TKW value based on feature analysis the image pixels assigned to seeds using a moisture-dependent TKW model trained to solve a regression problem of correlating image features with TKW value in relation with seed moisture content value.

15. The computer-implemented method according to any one of the preceding claims, further comprising generating the trained moisture-dependent TKW model by way of:
Acquiring a training data set comprising color image data of a scene comprising a seed sample of a plurality of seeds and at least both ground truth moisture content value and ground truth TKW value measured for the seed sample using a ground truth moisture measurement method and a ground truth TKW measurement method respectively;
Introducing the training data set into a model and training the model for feature extraction using a training algorithm to obtain a trained moisture content model;
Saving the trained moisture-dependent TKW model in a model repository.

16. The computer-implemented method according to any one of the preceding claims, further comprising estimating one or more seed size values, by way of:
Determining a total number of pixels assigned to seeds in the image;
Determining centroids for the pixels assigned to seeds by the segmentation algorithm;
Determining a number of identified centroids;
Counting for each centroid the number of pixels assigned to the centroid;
Determining a range for seed size values based on the counted number of pixels per centroid; and / or
Determining an average seed size by dividing the total number of pixels assigned to seeds by the number of centroids;
Causing output of the one or more seed size values.

17. The computer-implemented method according to any one of the preceding claims, wherein for image data of a seed sample collected at time point t, the method further comprises predicting evolution of one or more of determined seed parameter values within a prediction period t+y by way of:
From a data repository, acquiring one or more of the determined values for a seed sample parameter at a plurality of time points t-x to t for a crop season at a location of interest;
Generating a temporal measurement curve of the determined values for the season from the time point t-x to time point t for the crop season;
Acquiring, for the location, one or more of climate data, weather data and field data for a future period t+y;
Extrapolating the temporal measurement curve for the future period t+y in consideration of the one or more of climate data/, weather and / or field data for the location using an algorithm.

18. A computer program product comprising instructions which, when the program is executed by a computer, cause the computer to carry out the method according to any of the claims 10 to 17.
